# EUROPEAN PATENT APPLICATION

(11) **EP 2 108 445 A1**
(43) Date of publication of application: **14.10.2009**
(21) Application number: 08006667.3
(22) Date of filing: 01.04.2008
(51) Int. Cl.: B01D 71/26, B01D 67/00

(54) **System and process for producing a microporus membrane**

(71) Applicant: Tonen Chemical Corporation, Tokyo 108-8005 (JP)
(72) Inventor: The designation of the inventor has not yet been filed
(74) Representative: Veldhuizen, Albert Dirk Willem

(57) **Abstract**

A process for producing a microporous membrane. The process includes the steps of combining a polyolefin composition and a solvent or diluent to form a polyolefin solution, the polyolefin composition comprising at least a first polyethylene a crystal dispersion temperature (T_{cd}) and polypropylene, extruding the polyolefin solution through an extrusion die to form an extrudate, cooling the extrudate to form a cooled extrudate, orienting the cooled extrudate in at least a first direction by about one to about ten fold at a temperature of about T_{cd} +/- 15° C. and further orienting the cooled extrudate in at least a second direction by about one to about five fold at a temperature about 10° C. to about 40° C. higher than the temperature employed in the first orienting step. A process and system for reducing transverse direction film thickness fluctuation in a film or sheet produced from a polyolefin solution is also provided.

## Description

### FIELD OF THE INVENTION

This disclosure relates generally to a system and method for producing a microporous membrane having excellent properties, including high meltdown temperature, good surface smoothness and good electrochemical stability, as well as high permeability, high strength and low heat shrinkage, when used as a battery separator.

### BACKGROUND OF THE INVENTION

Microporous polyolefin membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous polyolefin membrane is used as a battery separator, particularly as a lithium ion battery separator, the membrane's performance significantly affects the properties, productivity and safety of the battery. Accordingly, the microporous polyolefin membrane should have suitably well-balanced permeability, mechanical properties, dimensional stability, shutdown properties, meltdown properties, etc. The term "well-balanced" means that the optimization of one of these characteristics does not result in a significant degradation in another.

As is known, it is desirable for the batteries to have a relatively low shutdown temperature and a relatively high meltdown temperature for improved battery safety, particularly for batteries exposed to high temperatures under operating conditions. Consistent dimensional properties, such as film thickness, are essential to high performing films. A separator with high mechanical strength is desirable for improved battery assembly and ' fabrication, and for improved durability. The optimization of material compositions, casting and stretching conditions, heat treatment conditions, etc. have been proposed to improve the properties of microporous polyolefin membranes.

In general, microporous polyolefin membranes consisting essentially of polyethylene (i.e., they contain polyethylene only with no significant presence of other species) have relatively low meltdown temperatures. Accordingly, proposals have been made to provide microporous polyolefin membranes made from mixed resins of polyethylene and polypropylene, and multi-layer, microporous polyolefin membranes having polyethylene layers and polypropylene layers in order to increase meltdown temperature. The use of these mixed resins can make the production of films having consistent dimensional properties, such as film thickness, all the more difficult.

U.S: Patent No. 4,734,196 proposes a microporous membrane of ultra-high-molecular-weight alpha-olefin polymer having a weight-average molecular weight greater than 5x10⁵, the microporous membrane having through holes 0.01 to 1 micrometer in average pore size, with a void ratio from 30 to 90% and being oriented such that the linear draw ratio in one axis is greater than two and the linear draw ratio is greater than ten. The microporous membrane is obtained by forming a gel-like object from a solution of an alpha-olefin polymer having a weight-average molecular weight greater than 5x10⁵, removing at least 10 wt % of the solvent contained in the gel-like object so that the gel-like object contains 10 to 90 wt % of alpha-olefin polymer, orientating the gel-like object at a temperature lower than that which is 10° C. above the melting point of the alpha-olefin polymer, and removing the residual solvent from the orientated product. A film is produced from the orientated product by pressing the orientated product at a temperature lower than that of the melting point of the alpha-olefin polymer.

U.S. Patent Publication No. 2007/0012617 proposes a method for producing a microporous thermoplastic resin membrane comprising the steps of extruding a solution obtained by melt-blending a thermoplastic resin and a membrane-forming solvent through a die, cooling an extrudate to form a gel-like molding, removing the membrane-forming solvent from the gel-like molding by a washing solvent, and removing the washing solvent, the washing solvent having (a) a surface tension of 24 mN/m or less at a temperature of 25° C., (b) a boiling point of 100° C. or lower at the atmospheric pressure, and (c) a solubility of 600 ppm (on a mass basis) or less in water at a temperature of 16° C.; and the washing solvent remaining in the washed molding being removed by using warm water. The molten polymer is fed into a first inlet at an end of a first manifold and a second inlet at the end of a second manifold on the opposite side of the first inlet. Two slit currents flow together inside the die. It is theorized that due to the absence of flow divergence of the melt inside the manifold, it may be possible to achieve uniform flow distribution within the die. This is said to result in improved thickness uniformity in the transverse direction the film or the sheet.

JP Publication No. 2004-083866 proposes a method for producing a polyolefin microporous film that includes preparing a gel-like molded product by melting and kneading the polyolefin with a liquid solvent, extruding the molten and kneaded product from a die, simultaneously and biaxially drawing in the machine and vertical directions, subsequently drawing at a higher temperature than that of the simultaneous biaxial drawing to increase anisotropy against the primary drawing. The redrawing is carried out to satisfy both relations: 0<λ1t/λ2m≤ 10, wherein λ1t denotes a draw ratio of the biaxial drawing in the vertical direction and λ2m denotes a draw ratio of the redrawing in the machine direction, and 0<λ1m/λ2t≤10, wherein λ1m denotes a draw ratio of the biaxial drawing in the machine direction and λ2t denotes a draw ratio of the redrawing in the vertical direction.

WO 2004/089627 discloses a microporous polyolefin membrane made of polyethylene and polypropylene comprising two or more layers, the polypropylene content being more than 50% and 95% or less by mass in at least one surface layer, and the polyethylene content being 50 to 95% by mass in the entire membrane.

WO 2005/113657 discloses a microporous polyolefin membrane having conventional shutdown properties, meltdown properties, dimensional stability and high-temperature strength. The membrane is made using a polyolefin composition comprising (a) composition comprising lower molecular weight polyethylene and higher molecular weight polyethylene, and (b) polypropylene. This microporous polyolefin membrane is produced by a so-called "wet process".

Despite these advances in the art, there remains a need for system and process capable of producing microporous polyolefin membranes and other high quality films or sheets.

### SUMMARY OF THE INVENTION

Provided is a process for producing a microporous membrane. The process includes the steps of combining a polyolefin composition and a solvent or diluent to form a polyolefin solution, the polyolefin composition comprising at least a first polyethylene having a crystal dispersion temperature (T_{cd}) and polypropylene, extruding the polyolefin solution through an extrusion die to form an extrudate, cooling the extrudate to form a cooled extrudate, orienting the cooled extrudate in at least a first direction by about one to about ten fold at a temperature of about T_{cd} +/- 15° C. and further orienting the cooled extrudate in at least a second direction by about one to about five fold at a temperature about 10° C. to about 40° C. higher than the temperature employed in the first orienting step.

In another aspect, a process for reducing transverse direction film thickness fluctuation in a film or sheet produced from a polyolefin solution is provided, the polyolefin solution comprising at least a first polyethylene having a crystal dispersion temperature (T_{cd}), a polypropylene and a solvent or diluent. The process includes the steps of extruding the polyolefin solution through an extrusion die to form an extrudate, cooling the extrudate to form a cooled extrudate, orienting the cooled extrudate in at least a first direction by about one to about ten fold at a temperature of about T_{cd} +/- 15° C. and further orienting the cooled extrudate in at least a second direction by about one to about five fold at a temperature about 10° C. to about 40° C. higher than the temperature employed in the first orienting step.

In one form, the oriented cooled extrudate is further processed to produce a membrane, utilizing the steps of removing at least a portion of the diluent or solvent to form a membrane, optionally stretching the dried membrane to a magnification of from about 1.1 to about 2.5 fold in at least one direction to form a stretched membrane, and heat-setting the membrane product of to form the microporous membrane.

In yet another aspect, a system for reducing transverse direction film thickness fluctuation in a film or sheet produced from a polyolefin solution, the polyolefin solution comprising at least a first polyethylene having a crystal dispersion temperature (T_{cd}), a polypropylene and a solvent or diluent, is provided. The system includes an extruder for preparing the polyolefin solution, an extrusion die for receiving and extruding the polyolefin solution to form an extrudate, means for cooling the extrudate to form a cooled extrudate, a first stretching machine for orienting the cooled extrudate in at least a first direction by about one to about ten fold at a temperature of about T_{cd} +/- 15° C., a second stretching machine for further orienting the cooled extrudate in at least a second direction by about one to about five fold at a temperature about 10° C. to about 40° C. higher than the temperature employed by said first stretching machine, and a controller for regulating the temperature of the first stretching machine and the temperature of the second stretching machine, wherein the transverse direction film thickness fluctuation of a film or sheet produce by the system is reduced by at least 25%.

In one form, the first stretching machine is a roll-type stretching machine.

In another form, the first stretching machine is a tenter-type stretching machine.

In yet another form, the second stretching machine is a tenter-type stretching machine.

In still yet another form, the polyolefin solution includes (i) at least about 5 wt.% high density polyethylene or at least about 6 wt. % high density polyethylene, or at least about 10 wt.% high density polyethylene, or at least about 30 wt.% high density polyethylene, and (ii) at least about 5 wt.% polypropylene or at least about 10 wt.% polypropylene or at least about 30 wt. % polypropylene, and (iii) at least about 4 wt.% ultra high molecular weight polyethylene or at least about 10 wt.% ultra high molecular weight polyethylene, the weight percents being based on the weight of the polyolefin solution.

In a further form, the polyolefin solution includes at least about 30 wt.% high density polyethylene, at least about 30 wt.% polypropylene and at least about 20 wt.% ultra high molecular weight polyethylene, the weight percents being based on the weight of the polyolefin solution.

In a still further form, the polyolefin of the polyolefin solution comprises from about 40% to about 100% or from about 20% to about 80% of the first polyethylene resin, the first polyethylene resin having a weight-average molecular weight of from about 2 x 10⁵ to about 5 x 10⁵ and a molecular weight distribution (Mw/Mn) of from about 5 to about 50, from about 5% to about 60 % or from about 15% to about 50 % of a polypropylene resin having a weight-average molecular weight of from about 6 x 10⁵ to about 4 x 10⁶, a molecular weight distribution (Mw/Mn) of from about 3 to about 30 and a heat of fusion of 90 J/g or more, and from about 0% to about 40% of a second polyethylene resin having a weight-average molecular weight of from about 1 x 10⁶ to about 5 x 10⁶, a. molecular weight distribution (Mw/Mn) of from about 3 to about 30, with the percentages based upon the mass of the polyolefin composition.

These and other advantages, features and attributes of the disclosed processes and systems and their advantageous applications and/or uses will be apparent from the detailed description that follows, particularly when read in conjunction with the figures appended hereto.

### BRIEF DESCRIPTION OF THE DRAWINGS

FIG. 1 is a schematic view of one embodiment of a system for producing a sequential biaxially oriented film or sheet of thermoplastic material, in accordance herewith; and

FIG. 2 is a schematic view of another embodiment of a system for producing a sequential biaxially oriented film or sheet of thermoplastic material, in accordance herewith.

### DETAILED DESCRIPTION OF THE INVENTION

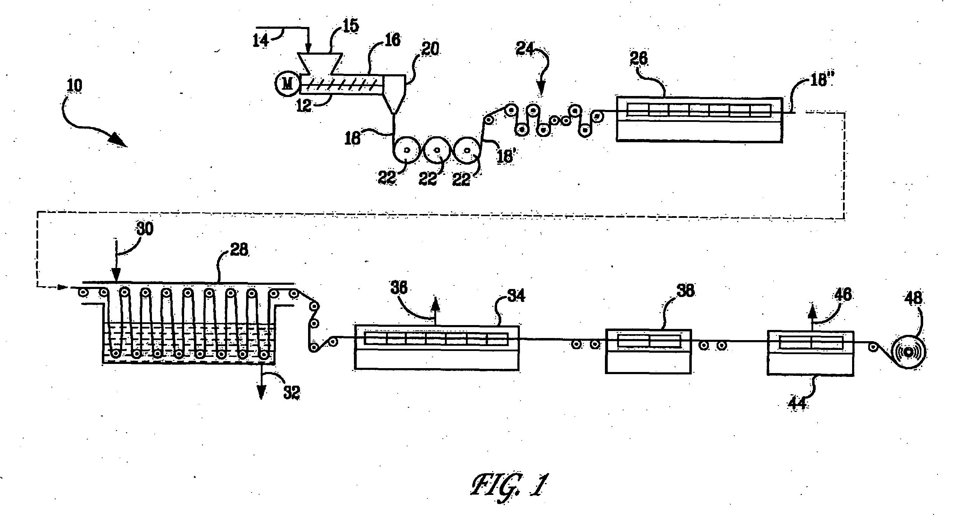

Reference is now made to FIGS. 1-2, wherein like numerals are used to designate like parts throughout.

Referring now to FIG. 1, a system 10 for producing a microporous film or sheet of thermoplastic material is shown. System 10 includes an extruder 12, extruder 12 having a feed hopper 14 for receiving one or more polymeric materials, processing additives, or the like, fed by a line 14. Extruder 12 also receives a nonvolatile solvent or diluent, such as paraffin oil, through a solvent feedline 16. A polymeric solution is prepared within extruder 12 by dissolving the polymer with heating and mixing in the solvent.

The heated polymeric solution is then extruded into a sheet 18 from a die 20 of extruder 12. The extruded sheet 18 is cooled by a plurality of chill rolls 22 to a temperature lower than the gelling temperature, so that the extruded sheet 18 gels. The cooled extrudate 18' passes to a first orientation apparatus 24, which may be a roll-type stretching machine, as shown. The cooled extrudate 18' is oriented with heating in the machine direction (MD) through the use of the roll-type stretching machine 24 and then the cooled extrudate 18' passes to a second orientation apparatus 26, for sequential orientation in at least the transverse direction (TD), to produce a biaxially oriented film or sheet 18". Second orientation apparatus 26 may be a tenter-type stretching machine and may be utilized for further stretching in the MD.

The biaxially oriented film or sheet 18" next passes to a solvent extraction device 28 where a readily volatile solvent such as methylene chloride is fed in through line 30. The volatile solvent containing extracted nonvolatile solvent is recovered from a solvent outflow line 32. The biaxially oriented film or sheet 18" next passes to a drying device 34, wherein the volatile solvent 36 is evaporated from the biaxially oriented film or sheet 18".

Optionally, the biaxially oriented film or sheet 18" next passes to dry orientation device 38 where the dried membrane is stretched to a magnification of from about 1.1 to about 2.5 fold in at least one direction to form a stretched membrane. Next, the biaxially oriented film or sheet 18" next passes to the heat treatment device 44 where the biaxially oriented film or sheet 18" is annealed so as to adjust porosity and remove stress left in the film or sheet 18", after which biaxially oriented film or sheet 18" is rolled up to form product roll 48.

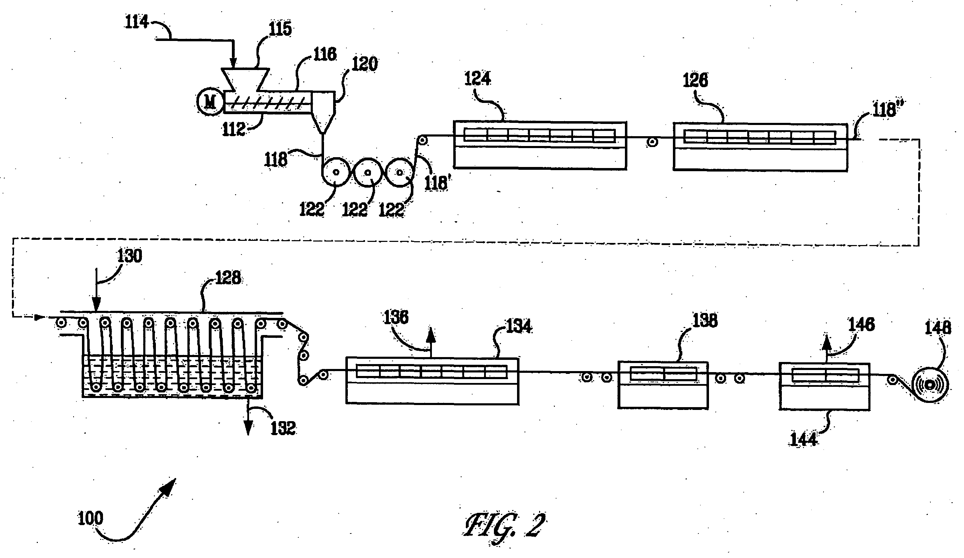

Referring now to FIG. 2, another form of a system 100 for producing a microporous film or sheet of thermoplastic material is shown. System 100 includes an extruder 112, extruder 112 having a feed hopper 115 for receiving one or more polymeric materials, processing additives, or the like, feed by a line 114. As with the system of FIG.1, extruder 112 also receives a nonvolatile solvent or diluent, such as paraffin oil, through a solvent feedline 116. A polymeric solution is prepared by within extruder 112 by dissolving the polymer with heating and mixing in the solvent.

The heated polymeric solution is then extruded into a sheet 118 from a die 120 of extruder 112. The extruded sheet 118 is cooled by a plurality of chill rolls 122 to a temperature lower than the gelling temperature, so that the extruded sheet 118 gels. The cooled extrudate 118' passes to a first orientation apparatus 124, which may be a tenter-type stretching machine, as shown. The cooled extrudate 118' is oriented with heating in the machine direction (MD) land the transverse direction (TD) and then the cooled extrudate 118' passes to a second orientation apparatus 126, for sequential orientation in the MD and TD, to produce a biaxially oriented film or sheet 118". Second orientation apparatus 126 may also be a tenter-type stretching machine.

The biaxially oriented film or sheet 118" next passes to a solvent extraction device 128 where a readily volatile solvent such as methylene chloride is fed in through line 130. The volatile solvent containing extracted nonvolatile solvent is recovered from a solvent outflow line 132. The biaxially oriented film or sheet 118" next passes to a drying device 134, wherein the volatile solvent 136 is evaporated from the biaxially oriented film or sheet 118".

Optionally, the biaxially oriented film or sheet 118" next passes to dry orientation device 138 where the dried membrane is stretched to a magnification of from about 1.1 to about 2.5 fold in at least one direction to form a stretched membrane. Next, the biaxially oriented film or sheet 18" next passes to the heat treatment device 144 where the biaxially oriented film or sheet 18" is annealed so as to adjust porosity and remove stress left in the film or sheet 18", after which biaxially oriented film or sheet 118" is rolled up to form product roll 148.

As indicated, the system disclosed herein is useful in forming microporous polyolefin membrane films and sheets. These films and sheets have reduced thickness variation in the transverse direction and find particular utility in the critical field of battery separators. The films and sheets disclosed herein provide a good balance of key properties, including high meltdown temperature, improved surface smoothness and improved electrochemical stability while maintaining high permeability, good mechanical strength and low heat shrinkage with good compression resistance. Of particular importance when used as a battery separator, the microporous membranes disclosed herein exhibit excellent heat shrinkage, melt down temperature and thermal mechanical properties; i.e., reduced maximum shrinkage in the molten state.

While the focus of the system described hereinabove has been with respect to the production of monolayer films and sheets, it is within the scope of this disclosure to provide multilayer laminated films and sheets produced in accordance herewith, as those skilled in the art can plainly understand.

Starting materials having utility in the production of the afore-mentioned films and sheets will now be described. As will be appreciated by those skilled in the art, the selection of a starting material is not critical. In one form, the starting material contains polyethylene. In another form, the starting materials contain a first polyethylene ("PE-1") having an Mw value of less than about 5 x 10⁶ or a second polyethylene ("UHMWPE-1") having an Mw value of at least about 1 x 10⁶. In one form, the starting materials can contain a first polypropylene ("PP-1"). In one form, the starting materials comprise one of (i) a polyethylene (PE), (ii) an ultra high molecular weight polyethylene (UHMWPE), (iii) PE-1 and PP-1, or (iv) PE-1, UHMWPE-1, and PP-1.

In one form of the above (ii) and (iv), UHMWPE-1 can preferably have an Mw in the range of from about 1 x 10⁶ to about 15 x 10⁶ or from about 1 x 10⁶ to about 5 x 10⁶ or from about 1 x 10⁶ to about 3 x 10⁶, and preferably contain about 0 wt.% to about 40 wt.%, or about 1 wt.% to about 30 wt.%, or about 1 wt.% to 20 wt.%, on the basis of total amount of PE-1 and UHMWPE-1 in order to obtain a film or sheet having a hybrid structure defined in the later section, and can be at least one of homopolymer or copolymer. In one form of the above (iii) and (iv), PP-1 can be at least one of a homopolymer or copolymer, or can preferably contain about 5 wt.% to about 60 wt.%, or about 30 wt.% to 50 wt.%, or no more than about 60 wt.%, on the basis of the total amount of the microporous film or sheet material. In one form, the Mw of polyolefin, in the microporous film or sheet material can have about 1.5 x 10⁶ or less, or in the range of from about 1.0 x 10⁵ to about 2.0 x 10⁶ or from about 2.0 x 10⁵ to about 1.5 x 10⁶ in order to obtain a microporous film or sheet having a hybrid structure defined in the later section. In one form, PE-1 can preferably have an Mw ranging from about 1 x 10⁴ to about 5 x 10⁵, or from about 2 x 10⁵ to about 4 x 10⁵, and can be one or more of a high-density polyethylene, a medium-density polyethylene, a branched low-density polyethylene, or a linear low-density polyethylene, and can be at least one of a homopolymer or copolymer.

In one form, the polypropylene can be, for example, one or more of (i) a propylene homopolymer or (ii) a copolymer of propylene and a fifth olefin. The copolymer can be a random or block copolymer. The fifth olefin can be, e.g., one or more of α-olefins such as ethylene, butene-1, pentene-1, hexene-1, 4-methylpentene-1, octene-1, vinyl acetate, methyl methacrylate, and styrene, etc.; and diolefins such as butadiene, 1,5-hexadiene, 1,7-octadiene, 1,9-decadiene, etc. The amount of the fifth olefin in the copolymer may be in a range that does not adversely affect the properties of the microporous membrane such as heat resistance, compression resistance, heat shrinkage resistance, etc. For example, the amount of the fifth olefin can be less than 10% by mol, based on 100% by mol, of the entire copolymer. Optionally, the polypropylene has one or more of the following properties: (i) the polypropylene has an Mw ranging from about 1 x 10⁴ to about 4 x 10⁶, or about 3 x 10⁵ to about 3 x 10⁶, or about 6 x 10⁵ to about 1.5 x 10⁶ ,(ii) the polypropylene has an Mw/Mn ranging from about 1.01 to about 100, or about 1.1 to about 50, or about 3 to about 30; (iii) the polypropylene's tacticity may be isotactic; (iv) the polypropylene may have a heat of fusion of at least about 90 Joules/gram or about 100 J/g to 120 J/g; (v) the polypropylene may have a melting peak (second melt) of at least about 160°C, (vi) the polypropylene may have a Trouton's ratio of at least about 15 when measured at a temperature of about 230°C and a strain rate of 25 sec⁻¹; and/or (vii) the polypropylene may have an elongational viscosity of at least about 50,000 Pa sec at a temperature of 230°C and a strain rate of 25 sec⁻¹. Optionally, the polypropylene has an Mw/Mn ranging from about 1.01 to about 100, or from about 1.1 to about 50.

In one form, the microporous film or sheet has a hybrid structure, which is characterized by a pore size distribution exhibiting relatively dense domains having a main peak in a range of 0.01 µm to 0.08 µm and relatively coarse domains exhibiting at least one sub-peak in a range of more than 0.08 µm to 1.5 µm or less in the pore size distribution curve. The ratio of the pore volume of the dense domains (calculated from the main peak) to the pore volume of the coarse domains (calculated from the sub-peak) is not critical, and can range, e.g., from about 0.5 to about 49.

The microporous film or sheet material can optionally contain one or more additional polyolefins, identified as the seventh polyolefin, which can be ,e.g., one or more of polybutene-1, polypentene-1, poly-4-methylpentene-1, polyhexene-1, polyoctene-1, polyvinyl acetate, polymethyl methacrylate, polystyrene and an ethylene α-olefin copolymer (except for an ethylene-propylene copolymer) and can have an Mw in the range of about 1 x 10⁴ to about 4 x 10⁶. In addition to or besides the seventh polyolefin, the microporous film or sheet material can further comprise a polyethylene wax, e.g., one having an Mw in the range of about 1 x 10³ to about 1 x 10⁴.

In one form, a method for producing a microporous polyolefin membrane is provided. The method comprises the steps of (1) combining (e.g., by melt-blending) a polyolefin composition and a membrane-forming solvent to prepare a polyolefin solution, (2) extruding the first polyolefin solution through a die to form an extrudate, (3) cooling the extrudate to form a gel-like sheet (cooled extrudate), (4) sequentially orienting the cooled extrudate through the use of a first orientation or stretching step and a second orientation or stretching step, (5) removing the membrane-forming solvent from the gel-like sheet to form a solvent-removed gel-like sheet, and (6) drying the solvent-removed gel-like sheet in order to form the, microporous membrane. An optional hot solvent treatment step (7) can be conducted between steps (4) and (5), if desired. After step (6), an optional step (8) of stretching the microporous membrane, an optional heat treatment step (9), an optional crosslinking step with ionizing radiations (10), and an optional hydrophilic treatment step (11), etc., can be conducted.

The polyolefin composition comprises polyolefin resins as described above that can be combined, e.g., by dry mixing or melt blending with an appropriate membrane-forming solvent to produce the first polyolefin solution. Optionally, the first polyolefin solution can contain various additives such as one or more antioxidant, fine silicate powder (pore-forming material), etc., provided these are used in a concentration range that does not significantly degrade the desired properties of the, microporous polyolefin membrane.

The membrane-forming solvent is preferably a solvent that is liquid at room temperature. While not wishing to be bound by any theory or model, it is believed that the use of a liquid solvent to form the polyolefin solution makes it possible to conduct stretching of the gel-like sheet at a relatively high stretching magnification. In one form, the membrane-forming solvent can be at least one of aliphatic, alicyclic or aromatic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. In one form where it is desired to obtain a gel-like sheet having a stable liquid solvent content, nonvolatile liquid solvents such as liquid paraffin can be used, either alone or in combination with other solvents. Optionally, a solvent which is miscible with polyethylene in a melt blended state but solid at room temperature can be used, either alone or in combination with a liquid solvent. Such solid solvent can include, e.g., stearyl alcohol, ceryl alcohol, paraffin waxes, etc.

The viscosity of the liquid solvent is not a critical parameter. For example, the viscosity of the liquid solvent can range from about 30 cSt to about 500 cSt, or from about 30 cSt to about 200 cSt, at 25°C. Although it is not a critical parameter, when the viscosity at 25°C is less than about 30 cSt, it can be more difficult to prevent foaming the polyolefin solution, which can lead to difficulty in blending. On the other hand, when the viscosity is greater than about 500 cSt, it can be more difficult to remove the liquid solvent from the microporous polyolefin membrane.

In one form, the resins, etc., used to produce to the polyolefin composition are melt-blended in, e.g., a double screw extruder or mixer. For example, a conventional extruder (or mixer or mixer-extruder) such as a double-screw extruder can be used to combine the resins, etc., to form the polyolefin composition. The membrane-forming solvent can be added to the polyolefin composition (or alternatively to the resins used to produce the polyolefin composition) at any convenient point in the process. For example, in one form where the polyolefin composition and the membrane-forming solvent are melt-blended, the solvent can be added to the polyolefin composition (or its components) at any of (i) before starting melt-blending, (ii) during melt blending of the first polyolefin composition, or (iii) after melt-blending, e.g., by supplying the membrane-forming solvent to the melt-blended or partially melt-blended polyolefin composition in a second extruder or extruder zone located downstream of the extruder zone used to melt-blend the polyolefin composition.

When melt-blending is used, the melt-blending temperature :is not critical. For example, the melt-blending temperature of the polyolefin solution can range from about 10°C higher than the melting point Tₘ₁ of the polyethylene in the first resin to about 120°C higher than Tₘ₁. For brevity, such a range can be represented as Tₘ₁ + 10°C to Tₘ₁ + 120°C. In a form where the polyethylene in the first resin has a melting point of about 130°C to about 140°C, the melt-blending temperature can range from about 140°C to about 250°C, or from about 170°C to about 240°C.

When an extruder such as a double-screw extruder is used for melt-blending, the screw parameters are not critical. For example, the screw can be characterized by a ratio L/D of the screw length L to the screw diameter D in the double-screw extruder, which can range, for example, from about 20 to about 100 or from about 35 to about 70. Although this parameter is not critical, when L/D is less than about 20, melt-blending can be more difficult, and when L/D is more than about 100, faster extruder speeds might be needed to prevent excessive residence time of the polyolefin solution in the double-screw extruder, which can lead to undesirable molecular weight degradation. Although it is not a critical parameter, the cylinder (or bore) of the double-screw extruder can have an inner diameter of in the range of about 40 mm to about 100 mm, for example.

The amount of the polyolefin composition in the polyolefin solution is not critical. In one form, the amount of polyolefin composition in the polyolefin solution can range from about 1 wt.% to about 75 wt.%, based on the weight of the polyolefin solution, for example from about 20 wt.% to about 70 wt.%.

A monolayer extrusion die is used to form an extrudate. In one form, the extrusion die is connected to an extruder, where the extruder contains the polyolefin solution. The die gap is generally not critical. For example, the extrusion die can have a die gap of about 0.1 mm to about 5 mm. Die temperature and extruding speed are also non-critical parameters. For example, the die can be heated to a die temperature ranging from about 140°C to about 250°C during extrusion. The extruding speed can range, for example, from about 0.2 m/minute to about 15 m/minute.

A gel-like sheet can be obtained by cooling, for example. Cooling rate and cooling temperature are not particularly critical. For example, the gel-like sheet can be cooled at a cooling rate of at least about 50°C/minute until the temperature of the gel-like sheet (the cooling temperature) is approximately equal to the gel-like sheet's gelatin temperature (or lower). In one form, the extrudate is cooled to a temperature of about 25°C or lower in order to form the gel-like sheet.

In one form, the membrane-forming solvent is removed (or displaced) from the gel-like sheet in order to form a solvent-removed gel-like sheet. A displacing (or "washing") solvent can be used to remove (wash away, or displace) the first and second membrane-forming solvents. The choice of washing solvent is not critical provided it is capable of dissolving or displacing at least a portion of the first and/or second membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉O C₂H₅, etc.

The method for removing the membrane-forming solvent is not critical, and any method capable of removing a significant amount of solvent can be used, including conventional solvent-removal methods. For example, the gel-like sheet can be washed by immersing the sheet in the washing solvent and/or showering the sheet with the washing solvent. The amount of washing solvent used is not critical, and will generally depend on the method selected for removal of the membrane-forming solvent. In one form, the membrane-forming solvent is removed from the gel-like sheet (e.g., by washing) until the amount of the remaining membrane-forming solvent in the gel-like sheet becomes less than 1 wt.%, based on the weight of the gel-like sheet.

In one form, the solvent-removed gel-like sheet obtained by removing the membrane-forming solvent is dried in order to remove the washing solvent. Any method capable of removing the washing solvent can be used, including conventional methods such as heat-drying, wind-drying (moving air), etc. The temperature of the gel-like sheet during drying (i.e., drying temperature) is not critical. For example, the drying temperature can be equal to or lower than the crystal dispersion temperature T_{cd}. T_{cd} is the lower of the crystal dispersion temperature T_{cd1} of the polyethylene in the first resin and the crystal dispersion temperature T_{cd2} of the polyethylene in the second resin. For example, the drying temperature can be at least 5°C below the crystal dispersion temperature T_{cd}. The crystal dispersion temperature of the polyethylene can be determined by measuring the temperature characteristics of the kinetic viscoelasticity of the polyethylene according to ASTM D 4065. In one form, the polyethylene has a crystal dispersion temperature in the range of about 90°C to about 100°C.

Although it is not critical, drying can be conducted until the amount of remaining washing solvent is about 5 wt. % or less on a dry basis, i.e., based on the weight of the dry microporous polyolefin membrane. In another form, drying is conducted until the amount of remaining washing solvent is about 3 wt. % or less on a dry basis.

Prior to the step of removing the membrane-forming solvents, the gel-like sheet is stretched in at least a first step and a second step, sequentially, in order to obtain a stretched, gel-like sheet.

In one form, the stretching can be accomplished by one or more of tenter-stretching, roller-stretching, or inflation stretching (e.g., with air). Although the choice is not critical, the stretching can be conducted monoaxially (i.e., in either the machine or transverse direction) or biaxially (both the machine and transverse direction). In the case of biaxial stretching (also called biaxial orientation), stretching can be simultaneous biaxial stretching, sequential stretching along one planar axis and then the other (e.g., first in the transverse direction and then in the machine direction), or multi-stage stretching (for instance, a combination of the simultaneous biaxial stretching and the sequential stretching).

The first stretching magnification is not critical. When monoaxial stretching is used, the first linear stretching magnification can be, e.g., about 1.5 fold or more, or about 1.5 to about 10 fold. When biaxial stretching is used, the linear stretching magnification can be, e.g., about 1.5 fold or more, or about 1.5 fold to about 16 fold in any lateral direction.

The total stretching magnification is not critical. When monoaxial stretching is used, the linear stretching magnification can be, e.g., abut 2 fold or more, or about 3 to about 30 fold. When biaxial stretching is used, the linear stretching magnification can be, e.g., about 3 fold or more in any lateral direction. In another form, the linear magnification resulting from stretching is at least about 9 fold, or at least about 16 fold, or at least about 25 fold in area magnification.

The temperature of the gel-like sheet during the first orientation or stretching step can be about (Tₘ + 10°C) or lower, or optionally in a range that is higher than T_{cd} - 15°C but lower than T_{cd} + 15°C Tₘ, wherein Tₘ is the lesser of the melting point Tₘ₁ of the polyethylene in the first resin and the melting point Tₘ₂ of the polyethylene in the second resin. In one form, the temperature of the gel-like sheet during the first orientation or stretching step can be about T_{cd} +/- 15°C, or about T_{cd} - 10°C to about T_{cd} + 10°C, or about 90°C to about 100°C.

In accordance herewith, the temperature of the gel-like sheet during the second orientation or stretching step can be about 10° C. to about 40° C higher than the temperature employed in the first orientation or stretching step. In one form, the temperature of the gel-like sheet during the first orientation or stretching step can be about 115° C. to about 130° C., or about 120° C. to about 125° C.

The stretching makes it easier to produce a relatively high-mechanical strength microporous polyolefin membrane with a relatively large pore size. Such microporous membranes are believed to be particularly suitable for use as battery separators.

Although it is not required, the gel-like sheet can be treated with a hot solvent. When used, it is believed that the hot solvent treatment provides the fibrils (such as those formed by stretching the gel-like sheet) with a relatively thick leaf-vein-like structure. The details of this method are described in WO 2000/20493.

In one form, the dried microporous membrane can be stretched, at least monoaxially. The stretching method selected is not critical, and conventional stretching methods can be used such as by a tenter method, etc. When the gel-like sheet has been stretched as described above the stretching of the dry microporous polyolefin membrane can be called dry-stretching, re-stretching, or dry-orientation.

The temperature of the dry microporous membrane during stretching (the "dry stretching temperature") is not critical. In one form, the dry stretching temperature is approximately equal to the melting point Tₘ or lower, for example in the range of from about the crystal dispersion temperature T_{cd} to the about the melting point Tₘ. In one form, the dry stretching temperature ranges from about 90°C. to about 135°C., or from about 95°C. to about 130°C.

When dry-stretching is used, the stretching magnification is not critical. For example, the stretching magnification of the microporous membrane can range from about 1.1 fold to about 2.5 or about 1.1 to about 2.0 fold in at least one lateral (planar) direction.

In one form, the membrane relaxes (or shrinks) in the direction(s) of stretching to achieve a final magnification of about 1.0 to about 2.0 fold compared to the size of the film at the start of the dry orientation step.

In one form, the dried microporous membrane can be heat-treated. In one form, the heat treatment comprises heat-setting and/or annealing. When heat-setting is used, it can be conducted using conventional methods such as tenter methods and/or roller methods. Although it is not critical, the temperature of the dried microporous polyolefin membrane during heat-setting (i.e., the "heat-setting temperature") can range from the T_{cd} to about the Tₘ, or from about 120°C. to about 130°C.

Annealing differs from heat-setting in that it is a heat treatment with no load applied to the microporous polyolefin membrane. The choice of annealing method is not critical, and it can be conducted, for example, by using a heating chamber with a belt conveyer or an air-floating-type heating chamber. Alternatively, the annealing can be conducted after the heat-setting with the tenter clips slackened. The temperature of the microporous polyolefin membrane during annealing can range from about the melting point Tₘ or lower, from about 60°C to (Tₘ - 10°C), or in a range of from about 60°C to (Tₘ - 5°C).

In one form, the microporous polyolefin membrane can be cross-linked (e.g., by ionizing radiation rays such as a-rays, (3-rays, 7-rays, electron beams, etc.) or can be subjected to a hydrophilic treatment (i.e., a treatment which makes the microporous polyolefin membrane more hydrophilic (e.g., a monomer-grafting treatment, a surfactant treatment, a corona-discharging treatment, etc.))).

### Properties of the Microporous Membrane

In one form, the microporous membrane has a thickness ranging from about 3 µm to about 200 µm, or about 5 µm to about 50 µm.

### A. Porosity of About 25 % to About 80 %

When the porosity is less than 25%, the microporous membrane generally does not exhibit the desired air permeability necessary for use as a battery separator. When the porosity exceeds 80%, it is more difficult to produce a battery separator of the desired strength, which can increase the likelihood of internal electrode short-circuiting.

### B. Air Permeability of About 20 Seconds/100 cm³ to About 400 Seconds/100 cm³ (Converted to.Value at 20 µm Thickness)

When the air permeability of the microporous membrane (as measured according to JIS P8117) ranges from about 20 seconds/100 cm³ to about 400 seconds/100 cm³, it is less difficult to form batteries having the desired charge storage capacity and desired cyclability. When the air permeability is less than about 20 seconds/100 cm³, it is more difficult to produce a battery having the desired shutdown characteristics, particularly when the temperature inside the battery is elevated. Air permeability P₁ measured on a microporous membrane having a thickness T₁ according to JIS P8117 can be converted to air permeability P₂ at a thickness of 20 µm by the equation of P₂ = (P₁ x 20)/T₁.

### C. Pin Puncture Strength of About 3,000 mN/20 µm or More

The pin puncture strength (converted to the value at a 20 µm membrane thickness) is the maximum load measured when the microporous membrane is pricked with a needle 1 mm in diameter with a spherical end surface (radius R of curvature: 0.5 mm) at a speed of 2 mm/second. When the pin puncture strength of the microporous membrane is less than 3,000 mN/20 µm, it is more difficult to produce a battery having the desired mechanical integrity, durability, and toughness. The pin puncture strength is preferably 3,500 mN/20 µm or more, for example, 4,000 mN/20 µm or more.

### D. Tensile Strength of At Least About 60,000 kPa

When the tensile strength according to ASTM D882 of the microporous membrane is at least about 60,000 kPa in both longitudinal and transverse directions, it is less difficult to produce a battery of the desired mechanical strength. The tensile strength is preferably about 80,000 kPa or more, for example about 100,000 kPa or more.

### E. Tensile Elongation of At Least About 100 %

When the tensile elongation according to ASTM D882 of the microporous membrane is 100% or more in both longitudinal and transverse directions, it is less difficult to produce a battery having the desired mechanical integrity, durability, and toughness.

### F. Heat Shrinkage Ratio of 10 % or Less

When the heat shrinkage ratio measured after holding the microporous membrane at a temperature of about 105 °C. for 8 hours exceeds 10 % in both longitudinal and transverse directions, it is more difficult to produce a battery that will not exhibit internal short-circuiting when the heat generated in the battery results in the shrinkage of the separators. The heat shrinkage ratio is preferably 6 % or less.

### G. Thickness Fluctuation of 1.0 or Less

When the thickness fluctuation of a battery separator exceeds 1.0, it is more difficult to produce a battery having appropriate protection against internal short circuiting. The thickness fluctuation is preferably 0.7 or less.

### H. Puncture Strength Fluctuation of 10.0 or Less

When the puncture strength fluctuation of a battery separator exceeds 10, it is more difficult to produce a battery having the desired safety and reliability. The puncture strength fluctuation is preferably 9 or less.

### I. Melt Down Temperature of At Least About 150 °C

In one form, the melt down temperature can range from about 150 °C to about 190 °C. One way to measure melt down temperature involves determining the temperature at which a microporous membrane test piece of 3 mm in the longitudinal direction and 10 mm in the transverse direction is broken by melting, under the conditions that the test piece is heated from room temperature at a heating rate of 5 °C/minute while drawing the test piece in the longitudinal direction under a load of 2 grams using a thermomechanical analyzer such as a TMA/SS6000 available from Seiko Instruments, Inc. The melt down temperature is preferably 160 °C to 190 °C.

### J. Maximum Shrinkage in Molten State of 30% or Less

The microporous membrane should exhibit a maximum shrinkage in the molten state (about 140 °C) of about 30% or less, preferably about 25% or less, or about 20% or less. The shrinkage measurement can be made, e.g., using a thermomechanical analyzer such as a TMA/SS6000 available from Seiko Instruments, Inc.

### K. Thickness Variation Ratio of 20 % or Less After Heat Compression

The thickness variation ratio after heat compression at 90 °C under a pressure of 2.2 MPa for 5 minutes is generally 20 % or less per 100 % of the thickness before compression. Batteries comprising microporous membrane separators with a thickness variation ratio of 20 % or less have suitably large capacity and good cyclability.

### L. Air Permeability After Heat Compression of About 100 Seconds/100 cm³ to About 700 Seconds/100 cm³

The microporous membranes disclosed herein, when heat-compressed at 90 °C under pressure of 2.2 MPa for 5 minutes, have an air permeability (as measured according to JIS P8117) of about 700 sec/100 cm³ or less, such as from about 100 to about 700 sec/100 cm³. Batteries using such membranes have suitably large capacity and cyclability. The air permeability after heat compression may be, for example, 650 sec/100 cm³ or less.

### M. Battery Capacity Recovery Ratio of 70. % or More (Retention Property of Lithium Ion Secondary Battery)

When a lithium ion secondary battery comprising a separator formed by a microporous membrane is stored at a temperature of 80 °C for 30 days, it is desired that the battery capacity recovery ratio [(capacity after high-temperature storing)/(initial capacity)] x 100 (%) should be 70 % or more. The battery capacity recovery ratio is preferably 75 % or more.

### N. Electrolytic Solution Absorption Speed of a Battery of 3.0 or More Compared to Comparative Example 1

When a lithium ion secondary battery comprising a separator formed by a microporous membrane is manufactured, it is desired that the electrolytic solution absorption speed of the battery should be 3.0 or more compared to that comprising a separator formed by Comparative Example 1 so as to improve productivity of the battery.

### EXAMPLES

The invention will be illustrated with the following examples. The test methods used in the examples are as follows:

### (1) Average Thickness (µm)

The thickness of each microporous membrane is measured by a contact thickness meter at 1 cm intervals in the area of 10 cm x 10 cm of the membrane, and measuring data at 100 points are averaged. The measurement can be made using conventional equipment, e.g., a Litematic, produced by Mitsutoyo Corporation.

### (2) Thickness Fluctuation

The Thickness Fluctuation is equal to the standard deviation of Average Thickness described above.

### (3) Air Permeability (sec/100 cm³/20 µm)

Air permeability P₁ measured on each microporous membrane having a thickness T₁ according to JIS P8117 is converted to air permeability P₂ at a thickness of 20 µm by the equation of P₂ = (P₁ x 20)/T₁.

### (4) Porosity (%)

Measured by a weighting method using the formula: Porosity % = 100 x (w₂-w₁)/w₂, wherein "w₁" is the actual weight of film and "w₂" is the assumed weight of 100% polyethylene.

### (5) Pin Puncture Strength measured in mN and converted to a thickness of 20 µm (mN/20 µm)

The maximum load in mN is measured when each microporous membrane having a thickness of T₁ is pricked with a needle of 1 mm in diameter with a spherical end surface (radius R of curvature: 0.5 mm) at a speed of 2 mm/second. The measured maximum load L₁ is converted to the maximum load L₂ at a thickness of 20 µm by the equation of L₂ = (L₁ x 20)/T₁, and used as pin puncture strength. Twenty measured data in the area of 10 cm x 10 cm of the membrane are averaged.

### (6) Pin Puncture Strength Fluctuation

Pin Puncture Strength Fluctuation is the standard deviation of the Pin Puncture Strength as averaged over 20 points as described above.

### (7) Tensile Strength and Tensile Elongation

Measured on a 10 mm wide rectangular test piece according to ASTM D882.

### (8) Heat Shrinkage Ratio (%)

The shrinkage ratios of each microporous membrane in both longitudinal and transverse directions are measured three times when exposed to 105 °C for 8 hours, and averaged to determine the heat shrinkage ratio.

### (9) Melt Down Temperature (°C) and Maximum Shrinkage in Molten State

The melt down temperature and maximum shrinkage in the molten state may be measured as follows: a rectangular sample of 3 mm x 50 mm is cut out of the microporous membrane such that the longitudinal direction of the sample is aligned with the transverse direction of the microporous membrane, and set in a thermomechanical analyzer (TMA/SS6000 available from Seiko Instruments, Inc.) at a chuck distance of 10 mm. With a load of 19.6 mN applied to a lower end of the sample, the temperature is elevated at a rate of 5 °C/minute to measure its size change. A size change ratio is calculated relative to the size at 23 °C, to obtain a temperature-size change ratio curve. The maximum shrinkage ratio in the molten state is observed in a temperature range of from 135°C to 145 °C. The maximum shrinkage in the molten state is measured at 140 °C. Melt down temperature is the temperature at which the membrane breaks.

### (10) Thickness Variation Ratio After Heat Compression and Air Permeability After Heat Compression (sec/100 cm³)

A microporous membrane sample is situated between a pair of highly flat plates, and heat-compressed by a press machine under a pressure of 2.2 MPa (22 kgf/cm²) at 90 °C for 5 minutes, to determine an average thickness in the same manner as above. A thickness variation ratio is calculated by the formula of (average thickness after compression - average thickness before compression) / (average thickness before compression) x 100. Air permeability after heat compression is measured with respect to air permeability according to JIS P8117 after heat-compressed under the above conditions.

### (11) Capacity Recovery Ratio

The capacity recovery ratio of a lithium ion battery containing the microporous membrane as a separator is measured as follows: First, the discharge capacity (initial capacity) of the lithium ion battery is measured by a charge/discharge tester before high temperature storage. After being stored at a temperature of 80 °C for 30 days, the discharge capacity is measured again by the same method to obtain the capacity after high temperature storage. The capacity recovery ratio (%) of the battery is determined by the following equation: Capacity recovery ratio (%) = [(capacity after high temperature storage) / (initial capacity)] x 100.

### (12) Electrolytic Solution Absorption Speed

Using a dynamic surface tension measuring apparatus (DCAT21 with high-precision electronic balance, available from Eiko Instruments Co., ltd.), a microporous membrane sample is immersed in an electrolytic solution (electrolyte: 1 mol/L of LiPF6, solvent: ethylene carbonate/dimethyl carbonate at a volume ratio of 3/7) kept at 18 °C, to determine an electrolytic solution absorption speed by the formula of [weight increment (g) of microporous membrane / weight (g) of microporous membrane before absorption]. The electrolytic solution absorption speed is expressed by a relative value, assuming that the electrolytic solution absorption rate in the microporous membrane of Comparative Example 1 is 1.

### EXAMPLE 1

Dry-blended were 99.8 parts by mass of a polyolefin composition comprising 20% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 50% by mass of high-density polyethylene (HDPE) having a Mw of 3.0 x 10⁵ and Mw/Mn of 8.6, Tₘ of 135°C, and T_{cd} of 100°C, and 30% by mass of a polypropylene (PP) having a Mw of 6.6 x 10⁵ and Mw/Mn of 11.4, and a heat of fusion of 103.3, and 0.2 parts by mass of tetrakis [methylene-3 -(3,5-ditertiary-butyl-4-hydroxyphenyl)-propionate] methane as an antioxidant. The polyolefin composition had a Mw/Mn of 8.6, a Tₘ of 135°C, and T_{cd} of 100°C.

Thirty parts by mass of the resultant mixture was charged into a strong-blending double-screw extruder having an inner diameter of 58 mm and L/D of 52.5, and 70 parts by mass of liquid paraffin [50 cst (40°C)] was supplied to the double-screw extruder via a side feeder. Melt-blending was conducted at 210°C and 200 rpm to prepare a first polyolefin solution.

The Mw and Mw/Mn of each UHMWPE and HDPE were measured by a gel permeation chromatography (GPC) method under the following conditions.
Measurement apparatus: GPC-150C available from Waters Corporation,
Column: Shodex UT806M available from Showa Denko K.K., Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500
Detector: Differential Refractometer available from Waters Cop., and
Calibration curve: Produced from a calibration curve of a single-dispersion, standard polystyrene sample using a predetermined conversion constant.

The polyolefin solution was supplied from its double-screw extruder to a monolayer-sheet-forming T-die at 210°C, to form an extrudate. The extrudate was cooled while passing through cooling rolls controlled at 15°C, to form a gel-like sheet. Using a first tenter-stretching machine, the gel-like sheet was biaxially stretched at 100.0° C, to 2 fold in both machine and transverse directions. Using a second tenter-stretching machine, the gel-like sheet was again biaxially stretched, this time at 120.0° C, to 2.5, fold in both machine and transverse directions.

The stretched gel-like sheet was fixed to an aluminum frame of 20 cm x 20 cm, and immersed in a bath of methylene chloride controlled at a temperature of 25° C. to remove the liquid paraffin with a vibration of 100 rpm for 3 minutes. The resulting membrane was air-cooled at room temperature. The dried membrane was re-stretched by a batch-stretching machine to a magnification of 1.4 fold in a transverse direction at 125°C. The re-stretched membrane, which remained fixed to the batch-stretching machine, was heat-set at 125° C. for 10 minutes to produce a microporous polyolefin membrane.

There was obtained a microporous membrane of polypropylene having the characteristic properties as shown in Table 1.

### EXAMPLE 2

Example 1 was repeated except that the temperature of the second wet stretching of the gel-like sheet was conducted at 125 °C..

There was obtained a microporous membrane of polypropylene having the characteristic properties as shown in Table 1.

### EXAMPLE 3

Example 1 was repeated except that the magnification of the first wet stretching of the gel-like sheet was 5 fold in a machine direction and the magnification of the second wet stretching of the gel-like sheet was 5 fold in a transverse direction.

There was obtained a microporous membrane of polypropylene having the characteristic properties as shown in Table 1.

### EXAMPLE 4

Example 1 was repeated except that there was no re-stretching of the dried membrane prior to heat-setting. Another exception from Example 1 for this Example 4 was that the heat setting temperature was 126°C.

There was obtained a microporous membrane of polypropylene having the characteristic properties as shown in Table 1.

### EXAMPLE 5

Example 1 was repeated except that the polyolefin composition included 70% by mass of the first polyethylene resin having a weight average molecular weight of 3 x 10⁵ and Mw/Mn of 8.6; and 30% by mass of a polypropylene resin having a weight average molecular weight of 6.6 x 10⁵, an Mw/Mn of 11.4, and a heat of fusion of 103.3 J/g. This polyolefin composition contains no second polyethylene resin.

There was obtained a microporous membrane of polypropylene having the characteristic properties as shown in Table 1.

### EXAMPLE 6

Example 1 was repeated except that the polyolefm composition included 30% by mass of a polypropylene resin having a weight average molecular weight of 1.1 x 10⁶, an Mw/Mn of 5.0, and a heat of fusion of 114.0 J/g. Another exception from Example 1 for this Example 6 is that the heat setting temperature was 126°C.

There was obtained a microporous membrane of polypropylene having the characteristic properties as shown in Table 1.

### EXAMPLE 7

Example 6 was repeated except that the temperature of the second wet stretching of the gel-like sheet was 125 °C.

There was obtained a microporous membrane of polypropylene having the characteristic properties as shown in Table 1.

### COMPARATIVE EXAMPLE 1

Dry-blended were 99.8 parts by mass of a polyolefin composition comprising 20% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 1.00°C, and 80% by mass of high-density polyethylene (HDPE) having a Mw of 3.0 x 10⁵ and Mw/Mn of 8.6, Tₘ of 135°C, and T_{cd} of 100°C, and 0.2 parts by mass of tetrakis [methylene-3 -(3,5-ditertiary-butyl-4-hydroxyphenyl)-propionate] methane as an antioxidant. The polyolefin composition had an Mw/Mn of 8.6, a Tₘ of 135°C, and T_{cd} of 100°C.

Thirty parts by mass of the resultant mixture was charged into a strong-blending double-screw extruder having an inner diameter of 58 mm and L/D of 52.5, and 70 parts by mass of liquid paraffin [50 cst (40°C)] was supplied to the double-screw extruder via a side feeder. Melt-blending was conducted at 210°C and 200 rpm to prepare a first polyolefin solution.

The polyolefin solution was supplied from its double-screw extruder to a monolayer-sheet-forming T-die at 210°C, to form an extrudate. The extrudate was cooled while passing through cooling rolls controlled at 0°C, to form a gel-like sheet. Using a tenter-stretching machine, the gel-like sheet was biaxially stretched at 115.0° C, to 5 fold in both machine and transverse directions.

The stretched gel-like sheet was fixed to an aluminum frame of 20 cm x 20 cm, and immersed in a bath of methylene chloride controlled at a temperature of 25° C. to remove the liquid paraffin with a vibration of 100 rpm for 3 minutes. The resulting membrane was air-cooled at room temperature. The dried membrane was not re-stretched for this Example. The membrane, was fixed to the batch-stretching machine, and was heat-set at 126.8° C. for 10 minutes to produce a microporous polyolefin membrane. The resulting oriented membrane was washed with methylene chloride to remove residual liquid paraffin, followed by drying.

There was obtained a microporous membrane of polypropylene having the characteristic properties as shown in Table 2.

### COMPARATIVE EXAMPLE 2

Example 1 was repeated except that the gel-like sheet was biaxially stretched at 115.0°C, to 5 fold in both the machine and transverse directions. Another exception from Example 1 for this Comparative Example was that the heat setting temperature was 127.5°C.

There was obtained a microporous membrane of polypropylene having the characteristic properties as shown in Table 2.

### COMPARATIVE EXAMPLE 3

Example 1 was repeated except that the first stretching temperature of the gel-like sheet was 115.0°C. Another exception from Example 1 employed for this Comparative Example was that the heat setting temperature was 127.0°C.

There was obtained a microporous membrane of polypropylene having the characteristic properties as shown in Table 2.

### COMPARATIVE EXAMPLE 4

Example 1 was repeated except that the first stretching temperature of the gel-like sheet was conducted at 120.0°C, and the second stretching temperature was conducted at 100.0°C. Another exception from Example 1 for this Comparative Example was that the heat setting temperature was 126.5°C for polyolefin composition.

There was obtained a microporous membrane of polypropylene having the characteristic properties as shown in Table 2.

### COMPARATIVE EXAMPLE 5

Example 1 was repeated except that the polyolefin composition employed included 72% by mass of the first polyethylene resin having a weight average molecular weight of 3 x 10⁵ and Mw/Mn of 8.6; and 8% by mass of the polypropylene resin having a weight average molecular weight of 6.6 x 10⁵, an Mw/Mn of 11.4, and a heat of fusion of 103.3 J/g; and 20% by mass of the second polyethylene resin having a weight average molecular weight of 2 x 10⁶ and Mw/Mn of 8.

There was obtained a microporous membrane of polypropylene having the characteristic properties as shown in Table 2.

### COMPARATIVE EXAMPLE 6

Example 1 was repeated except that the polyolefin composition employed included 20% by mass of the first polyethylene resin having a weight average molecular weight of 3 x 10⁵ and Mw/Mn of 8.6; and 70% by mass of the polypropylene resin having a weight average molecular weight of 6.6 x 10⁵, an Mw/Mn of 11.4, and a heat of fusion of 103.3 J/g; and 10% by mass of the second polyethylene resin having a weight average molecular weight of 2 x 10⁶ and Mw/Mn of 8. The gel-like sheet was broken in stretching.

There was obtained a microporous membrane of polypropylene having the characteristic properties as shown in Table 2.

### COMPARATIVE EXAMPLE 7

Example 1 was repeated except that the polyolefm composition employed included 20% by mass of the first polyethylene resin having a weight average molecular weight of 3 x 10⁵ and Mw/Mn of 8.6; and 30% by mass of the polypropylene resin having a weight average molecular weight of 6.6 x 10⁵, an Mw/Mn of 11.4, and a heat of fusion of 103.3 J/g; and 50% by mass of the second polyethylene resin having a weight average molecular weight of 2 x 10⁶ and Mw/Mn of 8.

There was obtained a microporous membrane of polypropylene having the characteristic properties as shown in Table 2.

### COMPARATIVE EXAMPLE 8

Example 1 was repeated except that the first gel-like sheet was biaxially stretched at 100.0° C to 1.25 fold in both machine and transverse directions, and, likewise, the sheet was again biaxially stretched this time at 120.0° C to 4 fold in both machine and transverse directions.

There was obtained a microporous membrane of polypropylene having the characteristic properties as shown in Table 2.

### COMPARATIVE EXAMPLE 9

Example 1 was repeated except that the polyolefin composition employed included 30% by mass of a polypropylene resin having a weight average molecular weight of 2.5 x 10⁵, an Mw/Mn of 3.5, and a heat of fusion of 69.2 J/g.

There was obtained a microporous membrane of polypropylene having the characteristic properties as shown in Table 2.

### COMPARATIVE EXAMPLE 10

Example 1 was repeated except that the polyolefin composition employed included 30% by mass of a polypropylene resin having a weight average molecular weight of 1.6 x 10⁶, an Mw/Mn of 3.2, and a heat of fusion of 78.4 J/g.

There was obtained a microporous membrane of polypropylene having the characteristic properties as shown in Table 2.

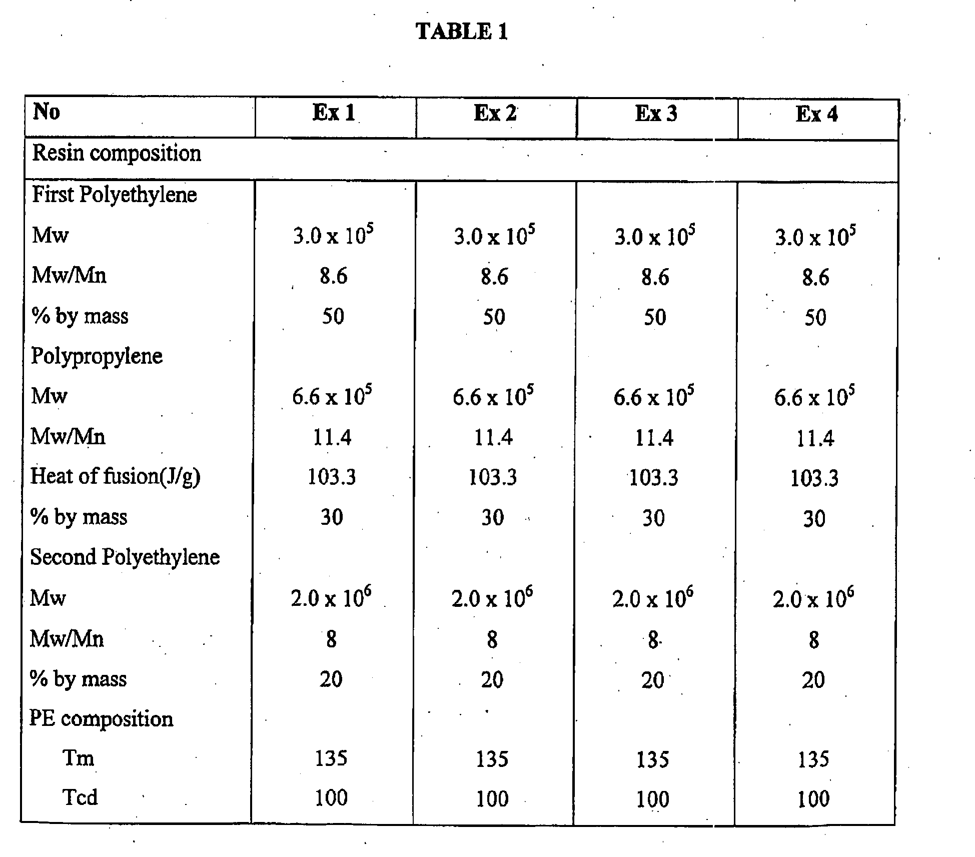

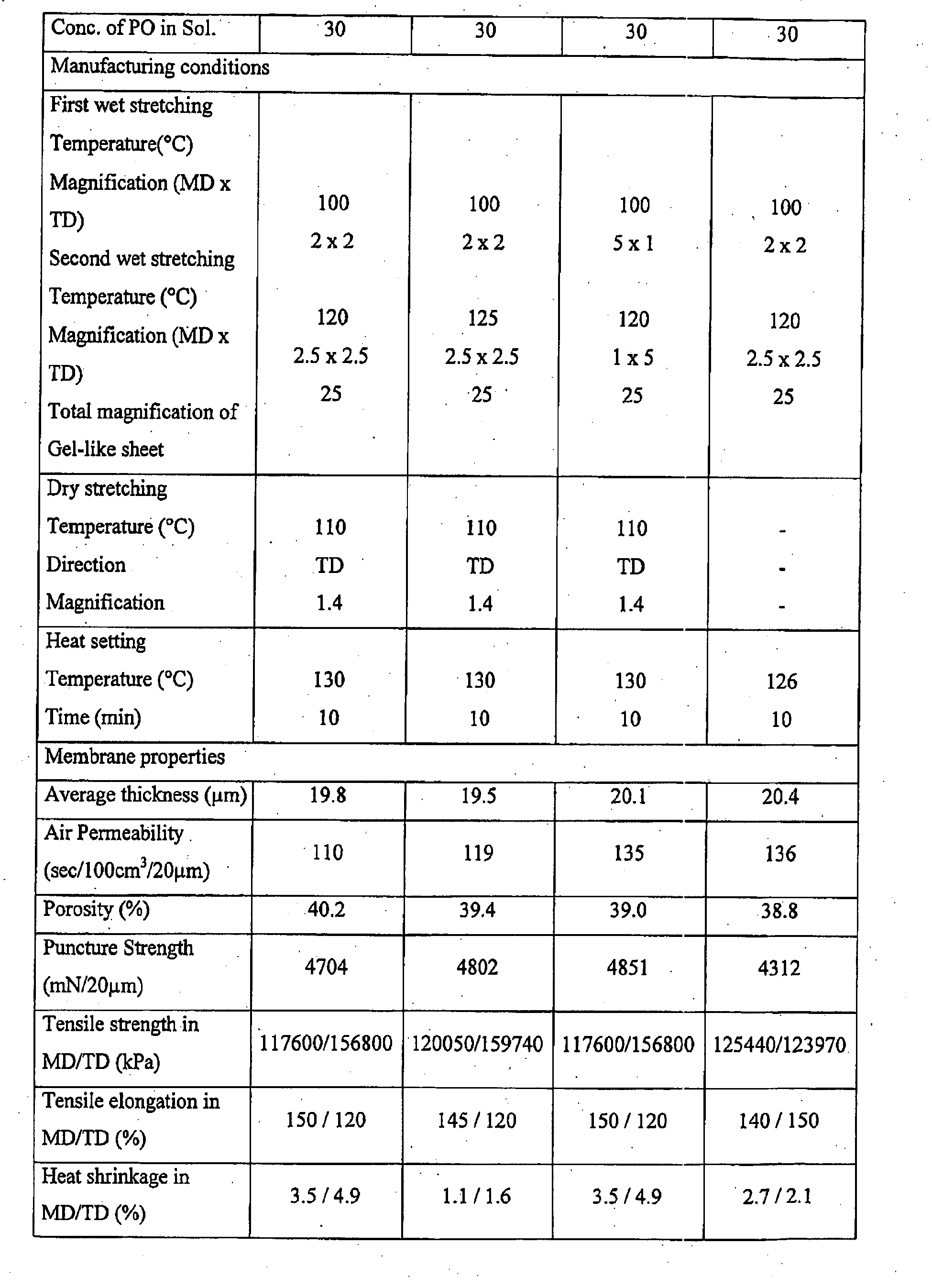

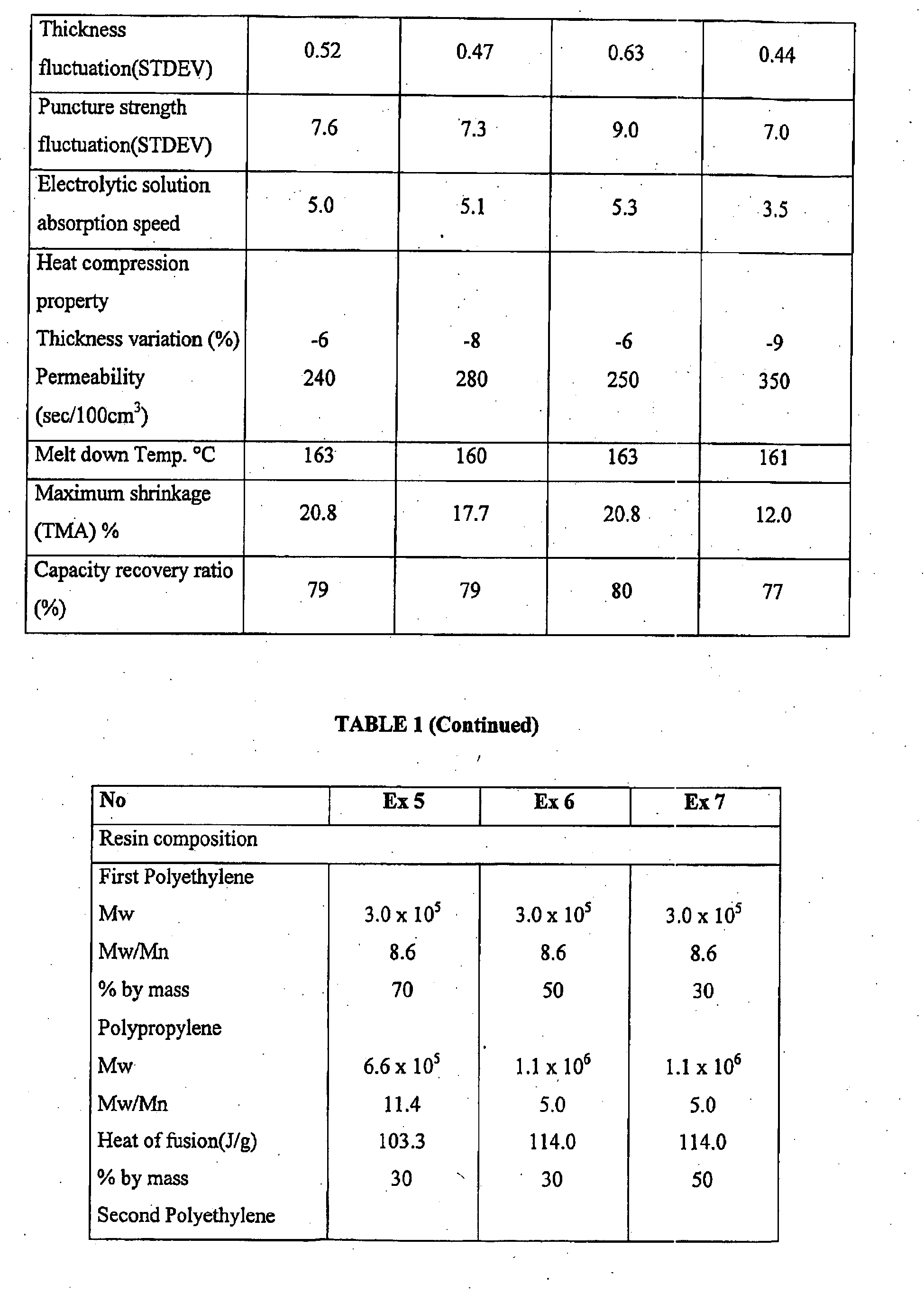

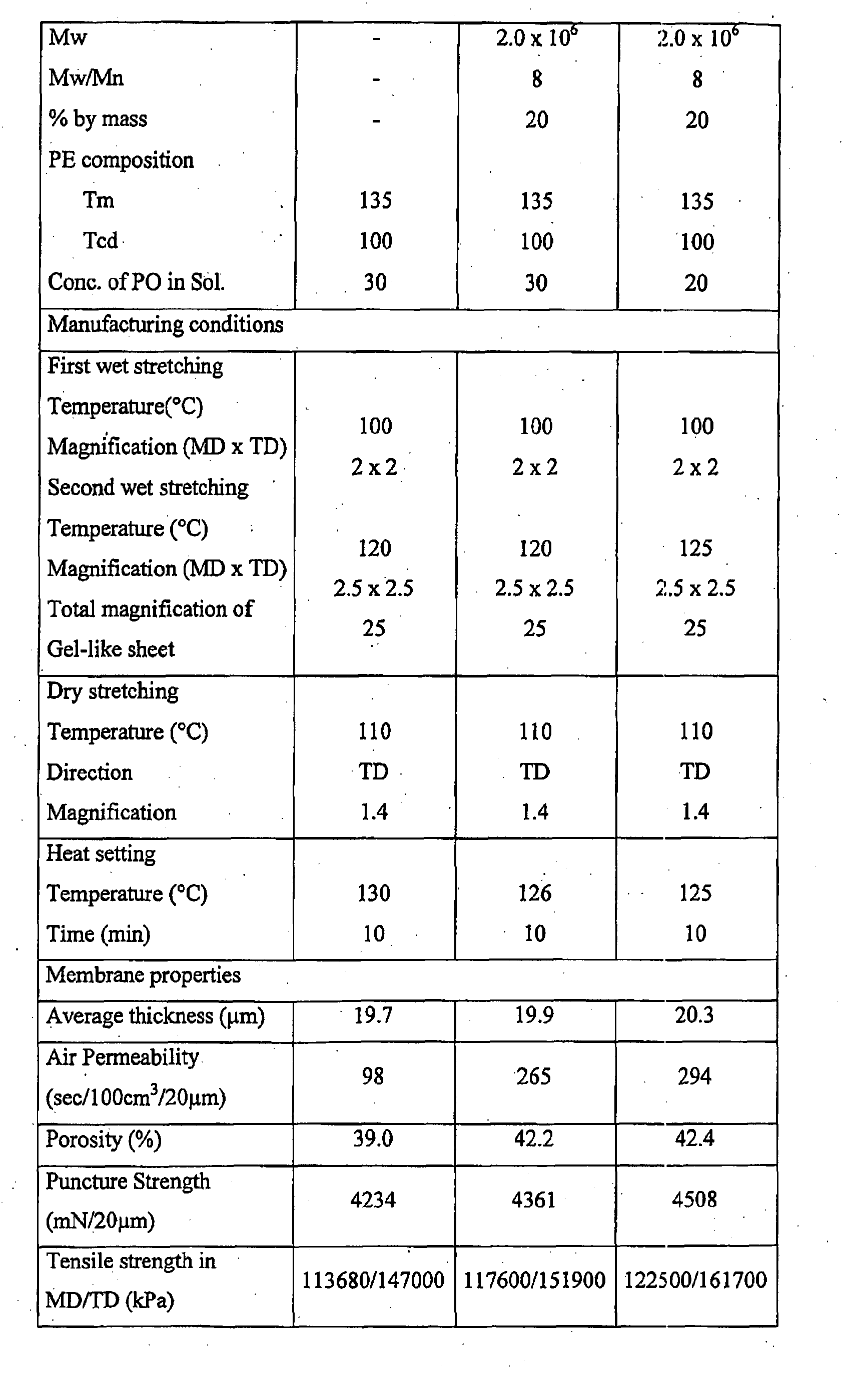

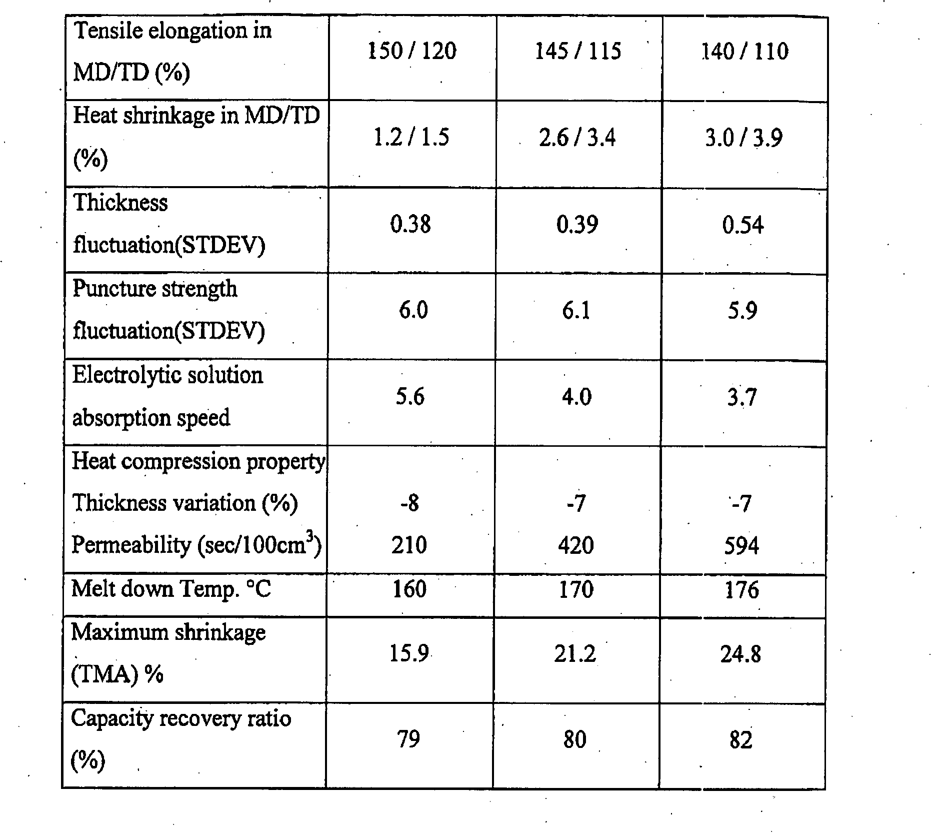

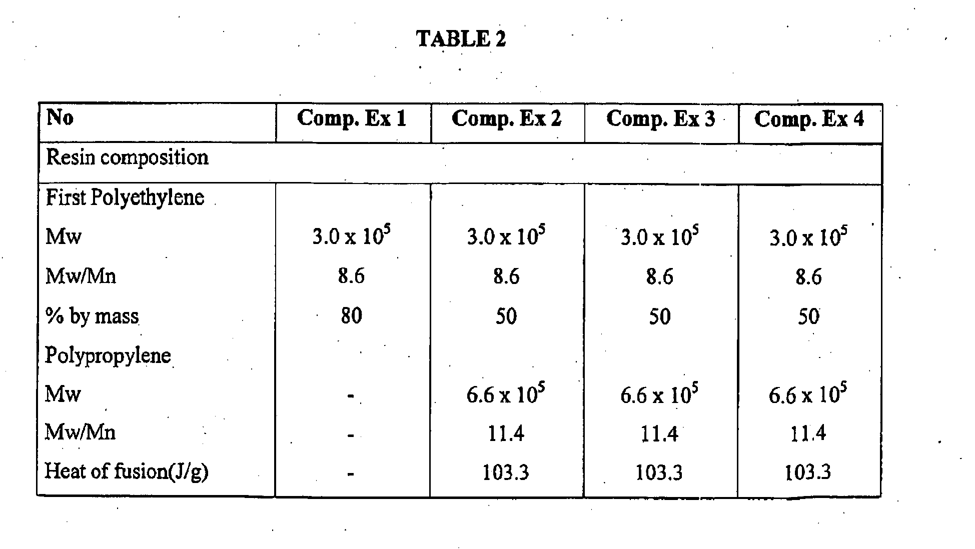

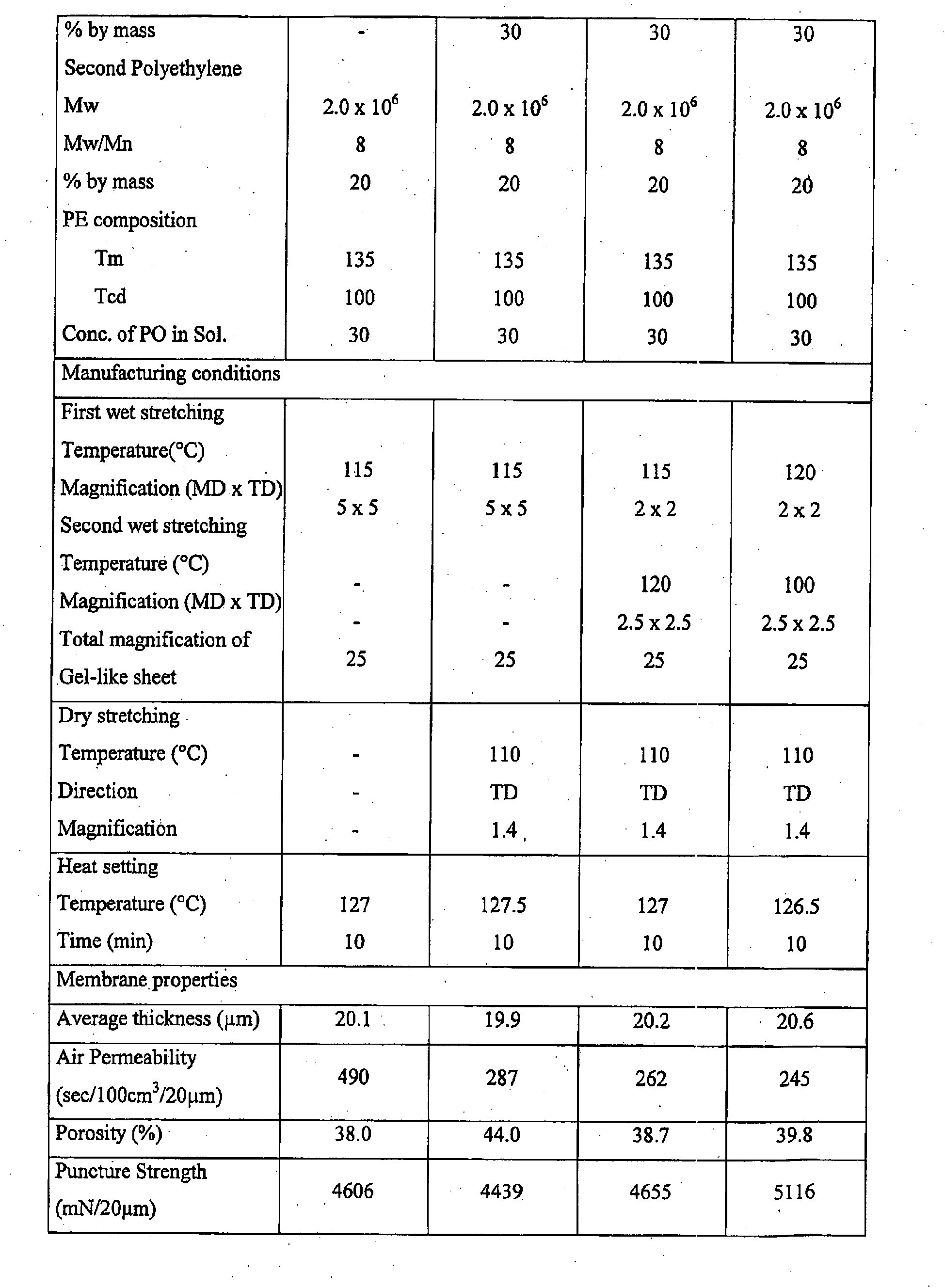

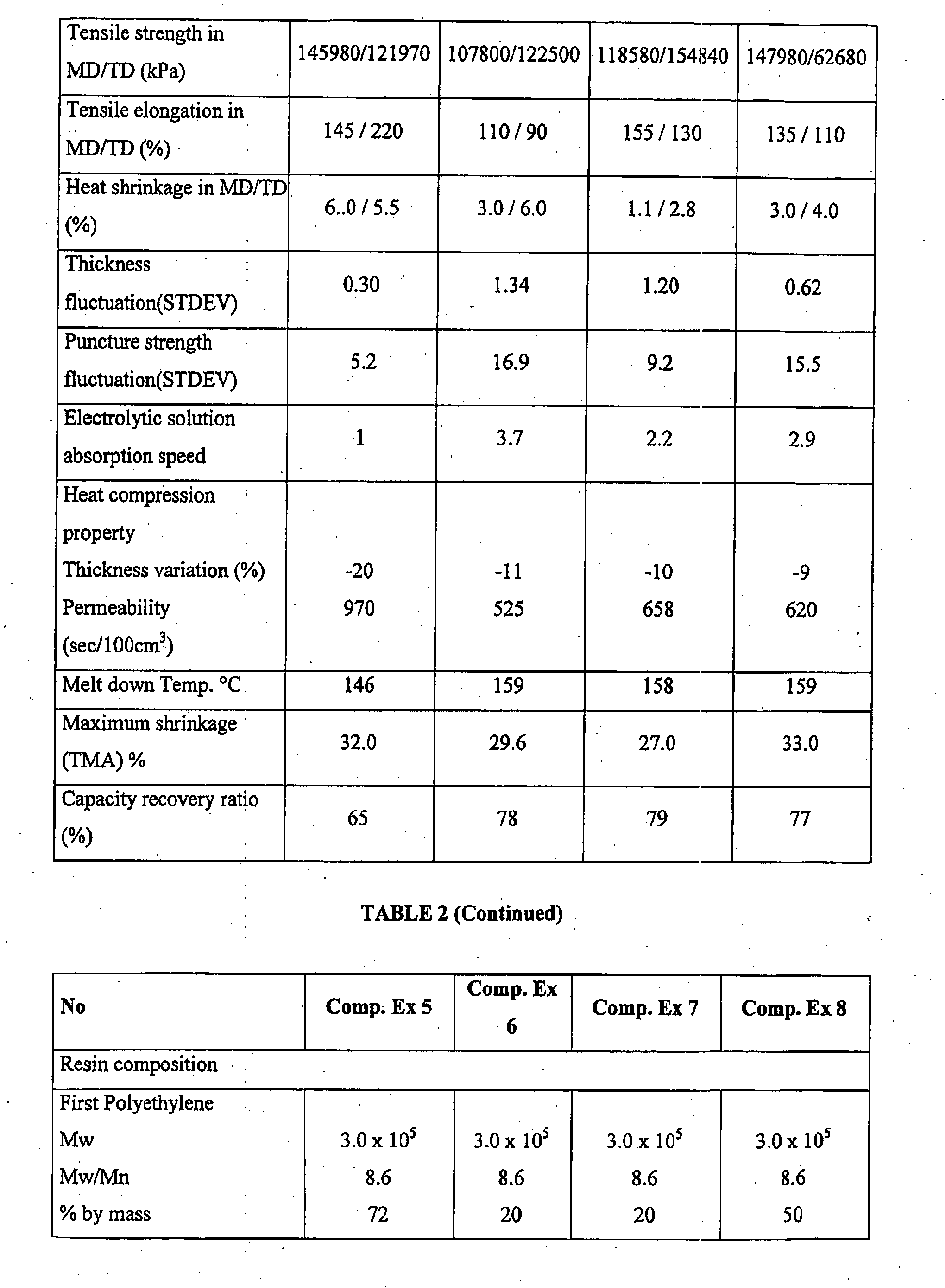

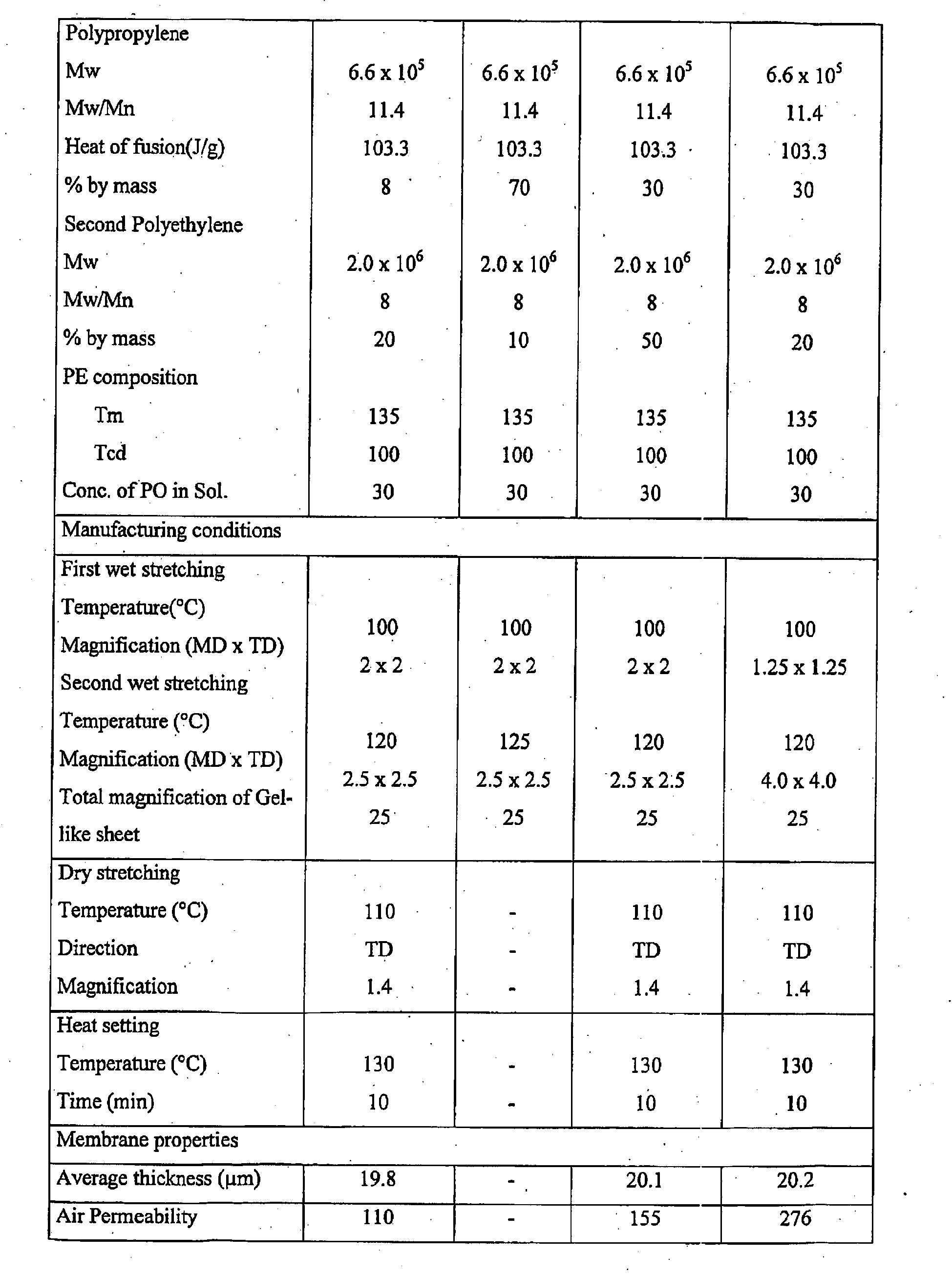

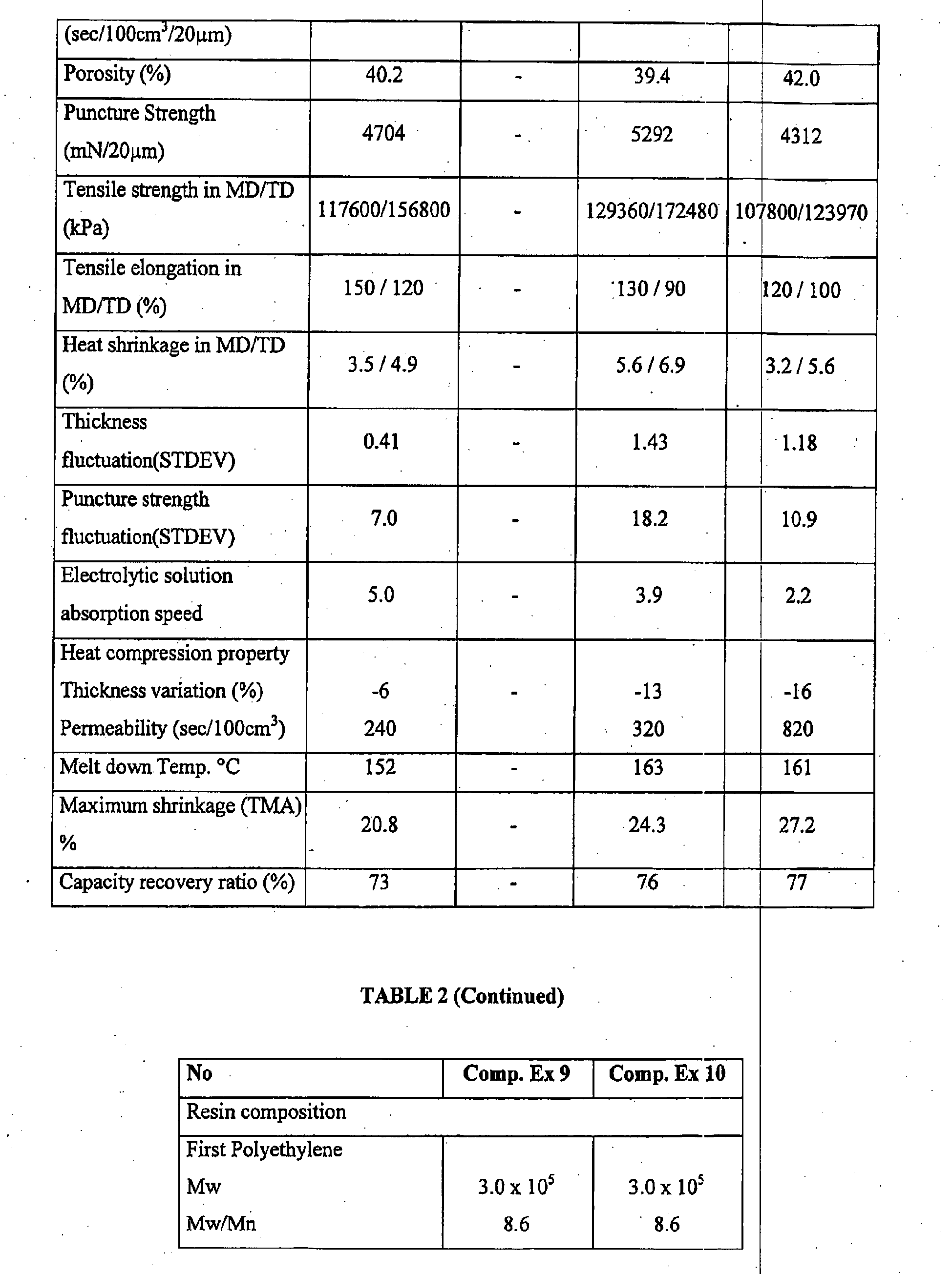

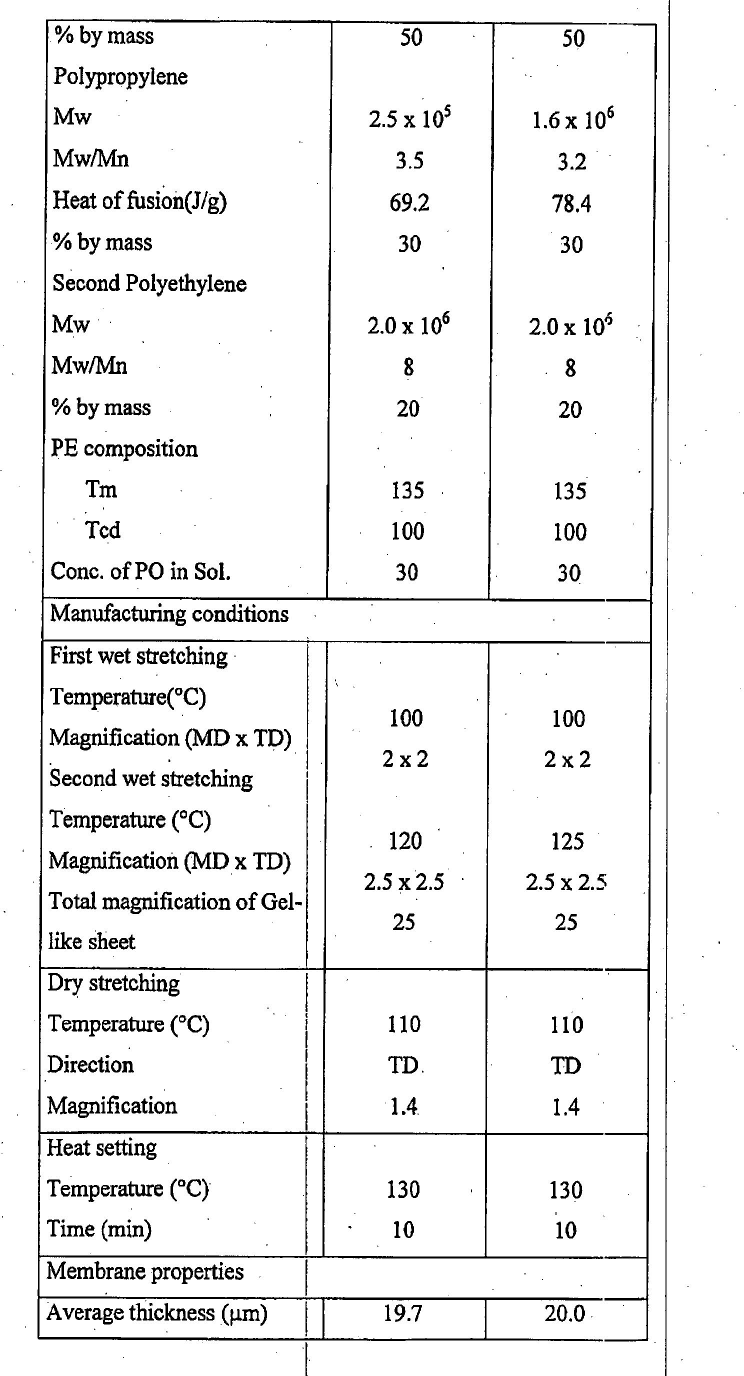

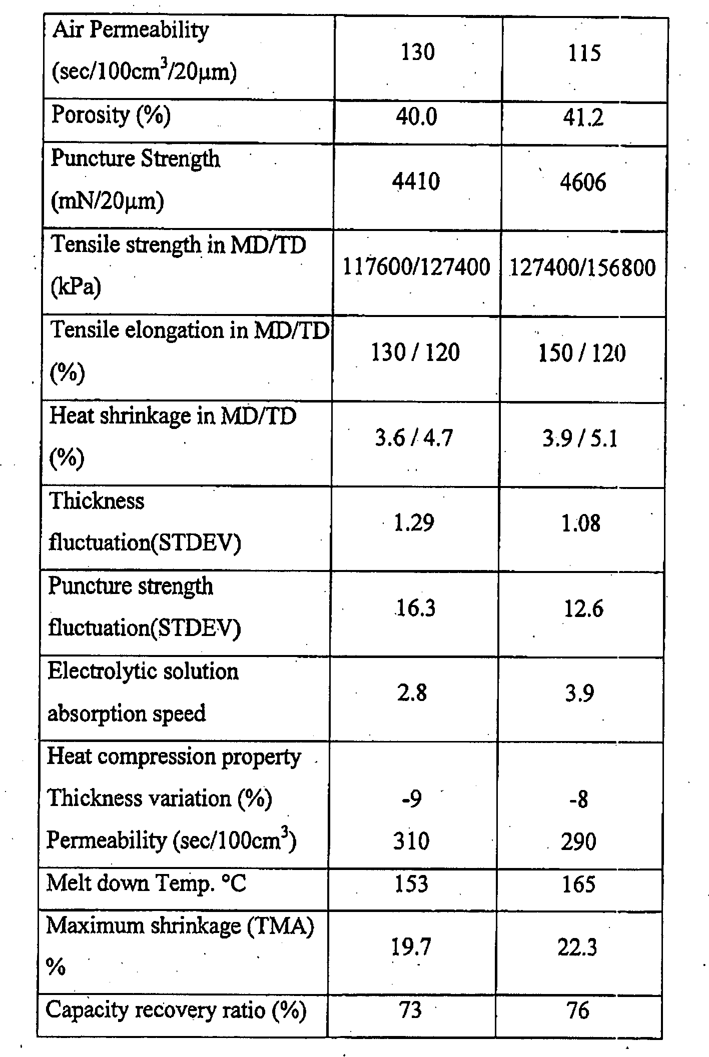

All patents, test procedures, and other documents cited herein, including priority documents, are fully incorporated by reference to the extent such disclosure is not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

The invention will now be further described by the following non-limiting embodiments.
1. A process for producing a microporous membrane, comprising the steps of:
   (a) combining a polyolefin composition and a solvent or diluent to form a polyolefin solution, the polyolefin composition comprising at least a first polyethylene having a crystal dispersion temperature (T_{cd}) and polypropylene;
   (b) extruding the polyolefin solution through an extrusion die to form an extrudate;
   (c) cooling the extrudate to form a cooled extrudate;
   (d) orienting the cooled extrudate in at least a first direction by about one to about ten fold at a temperature of about T_{cd} +/-15° C.; and
   (e) further orienting the cooled extrudate in at least a second direction by about one to about five fold at a temperature about 10° C. to about 40° C. higher than the temperature employed in step (d).
2. The process of embodiment 1, further comprising the steps of:
   (f) removing at least a portion of the solvent or diluent from the cooled extrudate to form a membrane;
   (g) optionally orienting the membrane to a magnification of from about 1.1 to about 2.5 fold in at least one direction; and
   (h) heat-setting the membrane to form the microporous membrane.
3. The process of embodiments 1 or 2, wherein said step of orienting the cooled extrudate in at least a first direction utilizes a roll-type stretching machine.
4. The process of any of embodiments 1 through 3, wherein said step of orienting the cooled extrudate in at least the first direction utilizes a tenter-type stretching machine.
5. The process of any of embodiments 1 through 4, wherein said step of further orienting the cooled extrudate in at least a second direction utilizes a tenter-type stretching machine.
6. The process of any of embodiments I through 5, wherein the polyolefin composition comprises a high density polyethylene and polypropylene.
7. The process of embodiment 6, wherein the polyolefin composition further comprises an ultra high molecular weight polyethylene.
8. The process of any of embodiments 1 through 7, wherein the polyolefin composition comprises at least about 30 wt. % high density polyethylene and at least about 30 wt. % polypropylene.
9. The process of any of embodiments 1 through 8, wherein the polyolefin composition comprises at least about 20 wt. % ultra high molecular weight polyethylene.
10. A microporous membrane made by the process of any of embodiments 1 though 9.

## Claims

1. A process for producing a microporous membrane, comprising the steps of:
(a) combining a polyolefin composition and a solvent or diluent to form a polyolefin solution, the polyolefin composition comprising at least a first polyethylene having a crystal dispersion temperature (T_{cd}) and polypropylene;
(b) extruding the polyolefm solution through an extrusion die to form an extrudate;
(c) cooling the extrudate to form a cooled extrudate;
(d) orienting the cooled extrudate in at least a first direction by about one to about ten fold at a temperature of about T_{cd} +/-15° C.; and
(e) further orienting the cooled extrudate in at least a second direction by about one to about five fold at a temperature about 10° C. to about 40° C. higher than the temperature employed in step (d).

2. The process of claim 1, further comprising the steps of:
(f) removing at least a portion of the solvent or diluent from the cooled extrudate to form a membrane;
(g) optionally orienting the membrane to a magnification of from about 1.1 to about 2.5 fold in at least one direction; and
(h) heat-setting the membrane to form the microporous membrane.

3. The process of claim 1, wherein said step of orienting the cooled extrudate in at least a first direction utilizes a roll-type stretching machine.

4. The process of claim 1, wherein said step of orienting the cooled extrudate in at least the first direction utilizes a tenter-type stretching machine.

5. The process of claim 1, wherein said step of further orienting the cooled extrudate in at least a second direction utilizes a tenter-type stretching machine.

6. The process of claim 1, wherein the polyolefin composition comprises a high density polyethylene and polypropylene.

7. The process of claim 6, wherein the polyolefin composition further comprises an ultra high molecular weight polyethylene.

8. The process of claim 6, wherein the polyolefin composition comprises at least about 30 wt. % high density polyethylene and at least about 30 wt. % polypropylene.

9. The process of claim 8, wherein the polyolefin composition comprises at least about 20 wt. % ultra high molecular weight polyethylene.

10. The process of claim 1, wherein the polyolefin composition comprises:
(i) at least about 20 wt.% of the first polyethylene resin, the first polyethylene resin having a weight-average molecular weight of from about 2 x 10⁵ to about 5 x 10⁵ and a molecular weight distribution (Mw/Mn) of from about 5 to about 50;
(ii) from about 5 wt.% to about 60 wt.% of a polypropylene resin having a weight-average molecular weight of from about 6 x 10⁵ to about 4 x 10⁶, a molecular weight distribution (Mw/Mn) of from about 3 to about 30; and
(iii) from about 0 wt.% to about 40 wt.% of a second polyethylene resin having a weight-average molecular weight of from about 1 x 10⁶ to about 5 x 10⁶, a molecular weight distribution (Mw/Mn) of from about 3 to about 30 a heat of fusion of 90 J/g or more, the weight percentages based on the weight of the polyolefm composition.

11. A process for reducing transverse direction film thickness fluctuation in a film or sheet produced from a polyolefin solution, the polyolefin solution comprising at least a first polyethylene having a crystal dispersion temperature (T_{cd}), a polypropylene and a solvent or diluent, comprising the steps of:
(a) extruding the polyolefin solution through an extrusion die to form an extrudate;
(b) cooling the extrudate to form a cooled extrudate;
(c) orienting the cooled extrudate in at least a first direction by about one to about ten fold at a temperature of about T_{cd} +/-15° C.; and
(d) further orienting the cooled extrudate in at least a second direction by about one to about five fold at a temperature about 10° C. to about 40° C. higher than the temperature employed in step (c).

12. The process of claim 11, further comprising the steps of:
(e) removing at least a portion of the solvent or diluent from the cooled extrudate to form a membrane
(f) optionally orienting the membrane to a magnification of from about 1.1 to about 2.5 fold in at least one direction; and
(g) heat-setting the membrane to form the microporous membrane.

13. The process of claim 11, wherein said step of orienting the cooled extrudate in at least a first direction utilizes a roll-type stretching machine.

14. The process of claim 11, wherein said step of orienting the cooled extrudate in at least the first direction utilizes a tenter-type stretching machine.

15. The process of claim 11, wherein said step of further orienting the cooled extrudate in at least a second direction utilizes a tenter-type stretching machine.

16. The process of claim 11, wherein the polyolefin solution comprises a high density polyethylene and polypropylene.

17. The process of claim 16, wherein the polyolefin solution further comprises an ultra high molecular weight polyethylene.

18. The process of claim 16, wherein the polyolefin solution comprises at least about 30 wt. % high density polyethylene and at least about 30 wt. % polypropylene.

19. The process of claim 18, wherein the polyolefin solution comprises at least about 20 wt. % ultra high molecular weight polyethylene.

20. The process of claim 11, wherein the polyolefin of the polyolefin solution comprises:
(i) from about 20 wt.% to about 80 wt.% of the first polyethylene resin, the first polyethylene resin having a weight-average molecular weight of from about 2 x 10⁵ to about 5 x 10⁵ and a molecular weight distribution (Mw/Mn) of from about 5 to about 50;
(ii) from about 5 wt.% to about 60 wt.% of a polypropylene resin having a weight-average molecular weight of from about 6 x 10⁵ to about 4 x 10⁶, a molecular weight distribution (Mw/Mn) of from about 3 to about 30; and
(iii) from about 0 wt.% to about 40 wt.% of a second polyethylene resin having a weight-average molecular weight of from about 1 x 10⁶ to about 5 x 10⁶, a molecular weight distribution (Mw/Mn) of from about 3 to about 30 a heat of fusion of 90 J/g or more, percentages based on the mass of the polyolefin composition.

21. A system for reducing transverse direction film thickness fluctuation in a film or sheet produced from a polyolefin solution, the polyolefin solution comprising at least a first polyethylene having a crystal dispersion temperature (T_{cd}), a polypropylene and a solvent or diluent, the system comprising:
(a) an extruder for preparing the polyolefin solution;
(b) an extrusion die for receiving and extruding the polyolefin solution to form an extrudate;
(c) means for cooling the extrudate to form a cooled extrudate;
(d) a first stretching machine for orienting the cooled extrudate in at least a first direction by about one to about ten fold at a temperature of about 90° C. to about 125° C.;
(e) a second stretching machine for further orienting the cooled extrudate in at least a second direction by about one to about five fold at a temperature about 10° C. to about 40° C. higher than the temperature employed by said first stretching machine; and
(f) a controller for regulating the temperature of the first stretching machine and the temperature of the second stretching machine;
wherein the transverse direction film thickness fluctuation of a film or sheet produce by the system is reduced by at least 25%.

22. The system of claim 21, wherein said first stretching machine is a roll-type stretching machine.

23. The system of claim 21, wherein said first stretching machine is a tenter-type stretching machine that also orients the cooled extrudate in a second direction.

24. The system of claim 21, wherein said second stretching machine is a tenter-type stretching machine.

25. The system of claim 24, wherein the polyolefin of the polyolefin solution comprises:
(i) from about 20% to about 80% of the first polyethylene resin, the first polyethylene resin having a weight-average molecular weight of from about 2 x 10⁵ to about 5 x 10⁵ and a molecular weight distribution (Mw/Mn) of from about 5 to about 50;
(ii) from about 5% to about 60% of a polypropylene resin having a weight-average molecular weight of from about 6 x 10⁵ to about 4 x 10⁶, a molecular weight distribution (Mw/Mn) of from about 3 to about 30; and
(iii) from about 0 % to about 40 % of a second polyethylene resin having a weight-average molecular weight of from about 1 x 10⁶ to about 5 x 10⁶, a molecular weight distribution (Mw/Mn) of from about 3 to about 30 a heat of fusion of 90 J/g or more, percentages based on the mass of the polyolefin composition.
